(19) Europäisches Patentamt / European Patent Office / Office européen des brevets

(11) **EP 4 538 311 A1**

(12) **EUROPEAN PATENT APPLICATION**
published in accordance with Art. 153(4) EPC


(43) Date of publication:
**16.04.2025 Bulletin 2025/16**

(21) Application number: **23823910.7**

(22) Date of filing: **13.06.2023**

(51) International Patent Classification (IPC):
***C08G 64/18*** *(2006.01)* ***C08G 77/448*** *(2006.01)*
***C08G 77/46*** *(2006.01)* ***C08L 69/00*** *(2006.01)*

(52) Cooperative Patent Classification (CPC):
**C08G 64/18; C08G 77/448; C08G 77/46; C08L 69/00**

(86) International application number:
**PCT/JP2023/021828**

(87) International publication number:
**WO 2023/243620 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.06.2022 JP 2022095242**



(71) Applicant: **Idemitsu Kosan Co.,Ltd.**
**Tokyo 100-8321 (JP)**

(72) Inventors:
- **YABUKAMI, Minoru**
  **Tokyo 100-8321 (JP)**
- **ISHIKAWA, Yasuhiro**
  **Tokyo 100-8321 (JP)**
- **AKIMOTO, Takafumi**
  **Tokyo 100-8321 (JP)**
- **KAKO, Atsushi**
  **Tokyo 100-8321 (JP)**

(74) Representative: **Hoffmann Eitle**
**Patent- und Rechtsanwälte PartmbB**
**Arabellastraße 30**
**81925 München (DE)**


(54) **POLYCARBONATE-POLYORGANOSILOXANE COPOLYMER**


(57) The present invention relates to a polycarbonate-polyorganosiloxane copolymer (A) including: a polyorganosiloxane-containing block (A-1) including a constituent unit represented by the following formula (1); and a polycarbonate block (A-2) formed of the repetition of a constituent unit represented by the following formula (2), wherein the content of the polyorganosiloxane-containing block (A-1) is 2 mass% or more and 30 mass% or less, and wherein the ratio [(average of $n^b$s)/(average of $n^a$s)] of the average of $n^b$s to the average of $n^a$s is 0.2 or more and 0.4 or less.

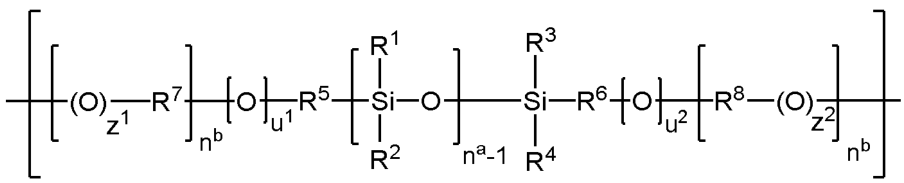
(1)

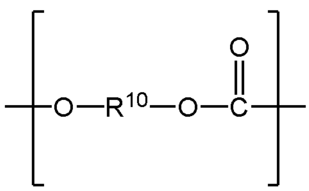
(2)


EP 4 538 311 A1

## Description

### Technical Field

The present invention relates to a polycarbonate-polyorganosiloxane copolymer, a polycarbonate-based resin composition, and a molded body.

### Background Art

A polycarbonate resin is an engineering plastic that is excellent in transparency and dynamic properties, and has extremely high impact resistance. It has been known that a polycarbonate-polyorganosiloxane copolymer obtained by copolymerizing a polycarbonate with a polyorganosiloxane is excellent in low-temperature impact resistance, and is also excellent in chemical resistance while maintaining high transparency.

In general, a method including causing an aromatic dihydroxy compound and phosgene to directly react with each other (interfacial polycondensation method), or a method including subjecting the aromatic dihydroxy compound and a carbonic acid diester in molten states to an ester exchange reaction (melt polymerization method) has been known as a method of producing the polycarbonate resin.

In PTL 1, as a method of producing a polycarbonate-polyorganosiloxane copolymer by the interfacial polymerization method, there is a disclosure of a method of producing a polycarbonate-polyorganosiloxane copolymer, including causing a diaryl diol compound, such as bisphenol, and phosgene to react with each other in the presence of an organic solvent to produce a polycarbonate oligomer having a reactive chloroformate group, and simultaneously or sequentially with the production of the polycarbonate oligomer, further bringing the polycarbonate oligomer, a bisphenol, and a polyorganosiloxane having hydroxyl group-containing aryl groups at both terminals thereof into contact with each other in a methylene chloride/water medium.

In general, in a polymerization reaction, a homocoupling body in which the molecules of one and the same raw material component are bonded to each other may be produced, or an unreacted raw material component may be produced because part of the raw materials are not involved in the polymerization reaction. Any such component is present in a polymer to be obtained by the reaction without being uniformly incorporated into the main chain of the polymer, and hence the transparency and dynamic properties of the polymer remarkably reduce. In the interfacial polymerization method, such problem hardly occurs, and hence a polycarbonate-polyorganosiloxane copolymer excellent in transparency and dynamic properties is obtained.

Meanwhile, in the interfacial polymerization method, phosgene having high toxicity needs to be used as a carbonate source. In addition, in a polymerization reaction system, methylene chloride having a large environmental load needs to be used as a solvent, and its removal requires a large degassing apparatus and large energy, thereby leading to an economic disadvantage. In contrast, a method of producing a polycarbonate-polyorganosiloxane copolymer based on the melt polymerization method can avoid such problems.

However, an investigation has been made on the improvement of the method of producing a polycarbonate-polyorganosiloxane copolymer based on the melt polymerization method because the transparency of the polycarbonate-polyorganosiloxane copolymer to be obtained tends to be insufficient.

In each of PTLs 2 to 4, as a polycarbonate-polyorganosiloxane copolymer that can be produced by the melt polymerization method and has high transparency, there is a disclosure of a polycarbonate-polyorganosiloxane copolymer including: a polyorganosiloxane block (A-1) including a specific structural unit such as a polyol structure; and a specific polycarbonate block (A-2).

### Citation List

#### Patent Literature

PTL 1: JP 2015-189953 A
PTL 2: WO 2021/112257 A1
PTL 3: WO 2021/112259 A1
PTL 4: WO 2021/112260 A1

Summary of Invention

Technical Problem

In each of PTLs 2 to 4, there is a disclosure of a method of producing a polycarbonate-polyorganosiloxane copolymer based on the melt polymerization method. However, the method has been susceptible to improvement in terms of, for example, fluidity, impact strength, tensile strength, and the appearance of an injection-molded body.

An object of the present invention is to obtain a polycarbonate-polyorganosiloxane copolymer that is excellent in fluidity, and whose molded body is excellent in impact resistance, tensile elongation, and appearance.

Solution to Problem

The inventors of the present invention have made extensive investigations, and as a result, have found that a polycarbonate-polyorganosiloxane copolymer having a specific structure can solve the above-mentioned problems. That is, the present invention includes the following.

<1> A polycarbonate-polyorganosiloxane copolymer (A), comprising:

a polyorganosiloxane-containing block (A-1) including a constituent unit represented by the following formula (1); and
a polycarbonate block (A-2) including repetition of a constituent unit represented by the following formula (2),
wherein a content of the polyorganosiloxane-containing block (A-1) is 2 mass% or more and 30 mass% or less, and
wherein a ratio [(average of $n^b$s)/(average of $n^a$s)] of an average of $n^b$s to an average of $n^a$s is 0.2 or more and 0.4 or less:

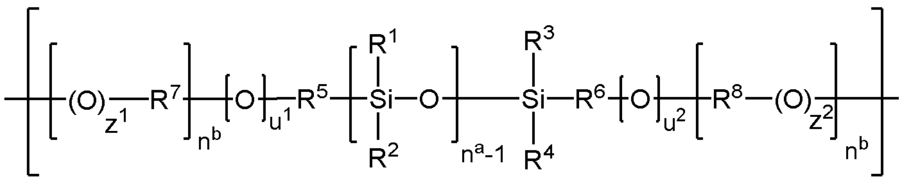
(1)

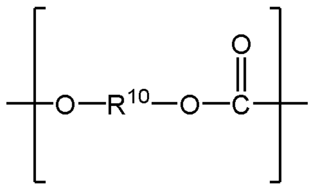
(2)

wherein $R^1$ to $R^4$ each independently represent a hydrogen atom, a halogen atom, an alkyl group having 1 to 10 carbon atoms, an alkoxy group having 1 to 10 carbon atoms, an aryl group having 6 to 12 carbon atoms, or an alkylaryl group having 7 to 22 carbon atoms, $R^5$ and $R^6$ each independently represent an alkylene group having 1 to 3 carbon atoms, and each of these groups may contain, in at least one of a main chain or a side chain thereof, at least one group selected from the group consisting of: -O-; -COO-; -CO-; -S-; -NH-; and $-NR^{111}-$, a plurality of $R^7$s or $R^8$s may be identical to or different from each other, and each represent an arylene group having 6 to 20 carbon atoms, an alkylene group having 1 to 10 carbon atoms, or an alkylarylene group having 7 to 22 carbon atoms, and each of these groups may contain, in at least one of a main chain or a side chain thereof, at least one group selected from the group consisting of: -O-; -COO-; -CO-; -S-; -NH-; and $-NR^{111}-$, $R^{111}$ represents an alkyl group having 1 to 10 carbon atoms, or an aryl group having 6 to 10 carbon atoms, $z^1$, $z^2$, $u^1$, and $u^2$ each represent 0 or 1, $n^a$ represents an integer of from 2 to 500, $n^b$s each independently represent an integer of from 2 to 200, and $R^{10}$ represents a divalent aliphatic hydrocarbon group having 2 to 40 carbon atoms, a divalent alicyclic hydrocarbon group having 3 to 40 carbon atoms, or a divalent aromatic hydrocarbon group having 6 to 20 carbon atoms, and each of these groups may be substituted with a substituent, and may contain at least one atom selected from the group consisting of: an oxygen atom; a nitrogen atom; a sulfur atom; and a halogen atom.

<2> The polycarbonate-polyorganosiloxane copolymer according to the above-mentioned item <1>, wherein in the polycarbonate-polyorganosiloxane copolymer (A), the average of $n^a$s is 10 or more and 90 or less.

<3> The polycarbonate-polyorganosiloxane copolymer according to the above-mentioned item <1> or <2>, wherein

the ratio [(average of $n^b$s)/(average of $n^a$s)] of the average of $n^b$s to the average of $n^a$s is 0.2 or more and 0.35 or less.

<4> The polycarbonate-polyorganosiloxane copolymer according to any one of the above-mentioned items <1> to <3>, wherein the polyorganosiloxane-containing block (A-1) is represented by the formula (1), the following formula (1-2), or the following formula (1-3):

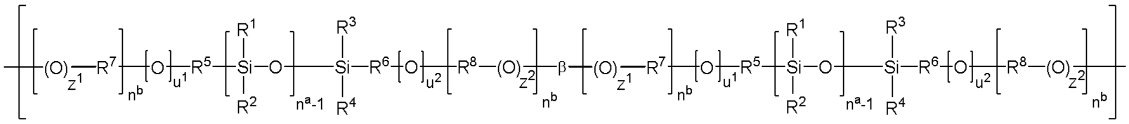

(1-2)

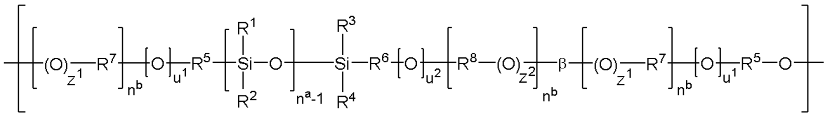

(1-3)

wherein $R^1$ to $R^8$, $z^1$, $z^2$, $u^1$, $u^2$, $n^a$, and $n^b$ each represent the same meaning as that described above, and when any one of the symbols is present in plurality, the plurality of symbols may be identical to or different from each other, and β represents a divalent group derived from a diisocyanate compound, or a divalent group derived from a dicarboxylic acid or a dicarboxylic acid halide.

<5> The polycarbonate-polyorganosiloxane copolymer according to any one of the above-mentioned items <1> to <4>, wherein the polycarbonate block (A-2) formed of the repetition of the constituent unit represented by the formula (2) includes a constituent unit represented by the following formula (111):

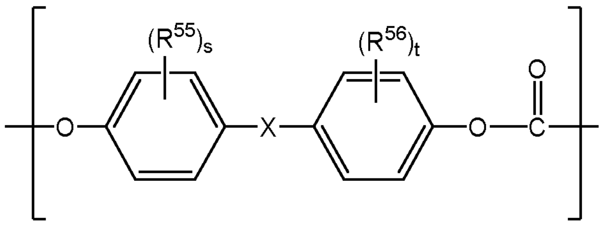

(111)

wherein $R^{55}$ and $R^{56}$ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O-, or -CO-, and "s" and "t" each independently represent an integer of from 0 to 4.

<6> The polycarbonate-polyorganosiloxane copolymer according to any one of the above-mentioned items <1> to <5>, wherein in the formula (1), $R^1$ to $R^4$ each represent a methyl group.

<7> The polycarbonate-polyorganosiloxane copolymer according to any one of the above-mentioned items <1> to <6>, wherein in the formula (1), $R^5$ and $R^6$ each represent a trimethylene group ($-(CH_2)_3-$).

<8> The polycarbonate-polyorganosiloxane copolymer according to any one of the above-mentioned items <1> to <7>, wherein in the formula (1), $R^7$ and $R^8$ each represent a dimethylene group ($-(CH_2)_2-$), a methyl-substituted dimethylene group ($-CH_2CH(CH_3)-$ or $-CH(CH_3)CH_2-$), a trimethylene group ($-(CH_2)_3-$), or a tetramethylene group ($-(CH_2)_4-$).

<9> The polycarbonate-polyorganosiloxane copolymer according to any one of the above-mentioned items <1> to <8>, wherein a content of a polyorganosiloxane structure (A-3) formed of repetition of a constituent unit represented by the following formula (3), the structure being included in the polyorganosiloxane-containing block (A-1), in the polycarbonate-polyorganosiloxane copolymer is 0.1 mass% or more and 30 mass% or less:

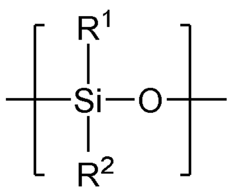

(3)

wherein $R^1$ and $R^2$ each represent the same meaning as that described above.

<10> The polycarbonate-polyorganosiloxane copolymer according to any one of the above-mentioned items <1> to <9>, wherein the polycarbonate-polyorganosiloxane copolymer has a viscosity-average molecular weight (Mv) of 15,000 or more and 30,000 or less.

<11> The polycarbonate-polyorganosiloxane copolymer according to any one of the above-mentioned items <1> to <10>, wherein the polycarbonate-polyorganosiloxane copolymer is obtained by a melt polymerization method.

<12> The polycarbonate-polyorganosiloxane copolymer according to any one of the above-mentioned items <1> to <11>, wherein the polycarbonate-polyorganosiloxane copolymer is obtained by using a diol monomer (a1).

<13> A polycarbonate-based resin composition, comprising the polycarbonate-polyorganosiloxane copolymer of any one of the above-mentioned items <1> to <12>.

<14> A molded body, comprising the polycarbonate-based resin composition of the above-mentioned item <13>.

## Advantageous Effects of Invention

According to the present invention, there can be obtained the polycarbonate-polyorganosiloxane copolymer that is excellent in fluidity, and whose molded body is excellent in impact resistance, tensile elongation, and appearance.

## Description of Embodiments

A polycarbonate-polyorganosiloxane copolymer and a polycarbonate-based resin composition including the copolymer of the present invention are described in detail below. Herein, a specification considered to be preferred may be arbitrarily adopted, and a combination of preferred specifications can be said to be more preferred. The term "XX to YY" as used herein means "XX or more and YY or less."

<Polycarbonate-polyorganosiloxane Copolymer (A)>

A polycarbonate-polyorganosiloxane copolymer (A) of the present invention includes: a polyorganosiloxane-containing block (A-1) including a constituent unit represented by the following formula (1); and a polycarbonate block (A-2) including the repetition of a constituent unit represented by the following formula (2).

The content of the polyorganosiloxane-containing block (A-1) is 2 mass% or more and 30 mass% or less.

The ratio [(average of $n^b$s)/(average of $n^a$s)] of the average of $n^b$s to the average of $n^a$s is 0.2 or more and 0.4 or less.

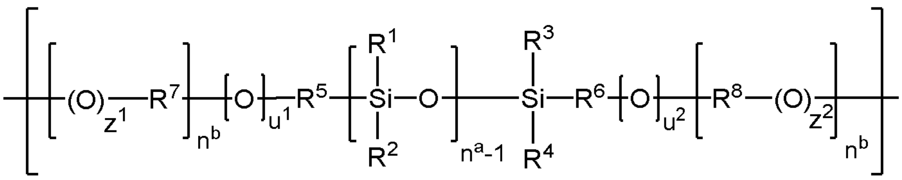
(1)

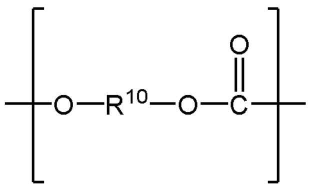
(2)

wherein $R^1$ to $R^4$ each independently represent a hydrogen atom, a halogen atom, an alkyl group having 1 to 10 carbon atoms, an alkoxy group having 1 to 10 carbon atoms, an aryl group having 6 to 12 carbon atoms, or an alkylaryl group having 7 to 22 carbon atoms, $R^5$ and $R^6$ each independently represent an alkylene group having 1 to 3 carbon atoms, and each of these groups may contain, in at least one of a main chain or a side chain thereof, at least one group selected from the group consisting of: -O-; -COO-; -CO-; -S-; -NH-; and $-NR^{111}-$, a plurality of $R^7$s or $R^8$s may be identical to or different from each other, and each represent an arylene group having 6 to 20 carbon atoms, an alkylene group having 1 to 10 carbon atoms, or an alkylarylene group having 7 to 22 carbon atoms, and each of these groups may contain, in at least one of a main chain or a side chain thereof, at least one group selected from the group consisting of: -O-; -COO-; -CO-; -S-; -NH-; and $-NR^{111}-$, $R^{111}$ represents an alkyl group having 1 to 10 carbon atoms, or an aryl group having 6 to 10 carbon atoms, $z^1$, $z^2$, $u^1$, and $u^2$ each represent 0 or 1, $n^a$ represents an integer of from 2 to 500, $n^b$s each independently represent an integer of from 2 to 200, and $R^{10}$ represents a divalent aliphatic hydrocarbon group having 2 to 40 carbon atoms, a

divalent alicyclic hydrocarbon group having 3 to 40 carbon atoms, or a divalent aromatic hydrocarbon group having 6 to 20 carbon atoms, and each of these groups may be substituted with a substituent, and may contain at least one atom selected from the group consisting of: an oxygen atom; a nitrogen atom; a sulfur atom; and a halogen atom.

In the polycarbonate-polyorganosiloxane copolymer (A), the polyorganosiloxane-containing block (A-1) preferably includes a constituent unit represented by any one of the formula (1), the following formula (1-2), and the following formula (1-3). The polycarbonate-polyorganosiloxane copolymer (A) may include the plurality of kinds of polyorganosiloxane-containing blocks (A-1). The polyorganosiloxane-containing block (A-1) more preferably includes a constituent unit represented by the formula (1):

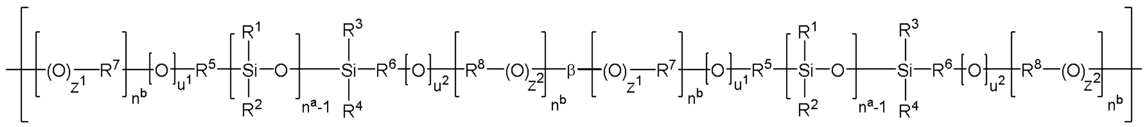
(1-2)

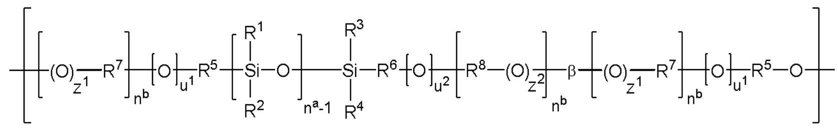
(1-3)

wherein $R^1$ to $R^8$, $z^1$, $z^2$, $u^1$, $u^2$, $n^a$, and $n^b$ each represent the same meaning as that described above, and when any one of the symbols is present in plurality, the plurality of symbols may be identical to or different from each other, and β represents a divalent group derived from a diisocyanate compound, or a divalent group derived from a dicarboxylic acid or a dicarboxylic acid halide.

Examples of the halogen atom represented by any one of $R^1$ to $R^4$ in each of the formulae include a fluorine atom, a chlorine atom, a bromine atom, and an iodine atom. Examples of the alkyl group having 1 to 10 carbon atoms that is represented by any one of $R^1$ to $R^4$ include a methyl group, an ethyl group, a n-propyl group, an isopropyl group, various butyl groups, various pentyl groups, and various hexyl groups. The term "various" as used herein means that a linear group and all kinds of branched groups are included, and the same holds true for the following.

The alkoxy group having 1 to 10 carbon atoms that is represented by any one of $R^1$ to $R^4$ is, for example, an alkoxy group whose alkyl group moiety is the same as the alkyl group. Examples of the aryl group having 6 to 12 carbon atoms that is represented by any one of $R^1$ to $R^4$ include a phenyl group and a naphthyl group. The alkylarylene group having 7 to 22 carbon atoms that is represented by any one of $R^1$ to $R^4$ is, for example, an alkylarylene group whose alkyl group moiety is the same as the alkyl group and whose arylene group moiety is a divalent group obtained by removing one hydrogen atom from the aryl group.

$R^1$ to $R^4$ each preferably represent a hydrogen atom, an alkyl group having 1 to 6 carbon atoms, an alkoxy group having 1 to 6 carbon atoms, an aryl group having 6 to 12 carbon atoms, or an alkylarylene group having 7 to 22 carbon atoms, each more preferably represent an alkyl group having 1 to 6 carbon atoms, and each still more preferably represent a methyl group.

Examples of the alkylene group having 1 to 3 carbon atoms that is represented by any one of $R^5$ and $R^6$ include a methylene group, a dimethylene group, a trimethylene group, and a methyl-substituted dimethylene group.

Examples of the arylene group having 6 to 20 carbon atoms that is represented by any one of $R^7$ and $R^8$ include a phenylene group and a naphthylene group. Examples of the alkylene group having 1 to 10 carbon atoms that is represented by any one of $R^7$ and $R^8$ include a methylene group, a dimethylene group, a trimethylene group, a methyl-substituted dimethylene group, and various butylene groups. Among the various butylene groups, a tetramethylene group is preferred. The alkylarylene group represented by any one of $R^7$ and $R^8$ is, for example, an alkylarylene group whose alkyl group moiety is the same as the alkylene group and whose arylene group moiety is the same as the arylene group.

However, $R^5$, $R^6$, $R^7$, and $R^8$ may each contain, in at least one of a main chain or a side chain thereof, at least one group selected from the group consisting of: -O-; -COO-; -OCO-; - CO-; -S-; -NH-; and $-NR^{111}-$. $R^{111}$ represents an alkyl group having 1 to 10 carbon atoms, or an aryl group having 6 to 10 carbon atoms. Examples of the alkyl group having 1 to 10 carbon atoms that is represented by $R^{111}$ include a methyl group, an ethyl group, a n-propyl group, an isopropyl group, various butyl groups, various pentyl groups, and various hexyl groups. Examples of the aryl group having 6 to 10 carbon atoms that is represented by $R^{111}$ include a phenyl group and a naphthyl group.

$R^5$ and $R^6$ each preferably represent a methylene group ($-(CH_2)-$), a dimethylene group ($-(CH_2)_2-$), or a trimethylene group ($-(CH_2)_3-$), and each more preferably represent a trimethylene group ($-(CH_2)_3-$).

$R^7$ and $R^8$ each preferably represent an alkylene group having 1 to 10 carbon atoms, each more preferably represent an alkylene group having 1 to 5 carbon atoms, each still more preferably represent a dimethylene group

($-(CH_2)_2-$), a methyl-substituted dimethylene group ($-CH_2CH(CH_3)-$or $-CH(CH_3)CH_2-$), a trimethylene group, or a tetramethylene group ($-(CH_2)_4-$), and each still more preferably represent a dimethylene group.

$z^1$, $z^2$, $u^1$, and $u^2$ each represent 0 or 1.

It is preferred that $z^1$ and $z^2$ each represent 1, and it is more preferred that both of $z^1$ and $z^2$ represent 1.

It is preferred that $u^1$ and $u^2$ each represent 1, and it is more preferred that both of $u^1$ and $u^2$ represent 1.

In the formula (1), a polyorganosiloxane block in which $R^1$ to $R^4$ each represent a methyl group, $R^5$ and $R^6$ each represent a trimethylene group, $R^7$ and $R^8$ each represent a dimethylene group, $z^1$ and $z^2$ each represent 1, and $u^1$ and $u^2$ each represent 1 is preferred.

$n^a$ represents the chain length of a polyorganosiloxane structure in the formula (1). In the polycarbonate-polyorganosiloxane copolymer (A), $n^a$ represents an integer of 2 or more and 500 or less, preferably an integer of 10 or more and 90 or less, more preferably an integer of 20 or more and 70 or less, still more preferably an integer of 30 or more and 60 or less, still further more preferably an integer of 35 or more and 50 or less.

The average of $n^a$s, that is, the average chain length of the polyorganosiloxane structures in the formula (1) is 2 or more and 500 or less, preferably 10 or more and 90 or less, more preferably 20 or more and 70 or less, still more preferably 30 or more and 60 or less, still more preferably 35 or more and 50 or less. When the average chain length of the polyorganosiloxane structures in the formula (1) falls within the above-mentioned ranges, a copolymer whose molded body is excellent in impact resistance, tensile elongation, and appearance is obtained.

The number of repetitions of a $-SiR^1R^2-O-$ structure in the formula (1) is $n^a-1$.

The average chain length of the polyorganosiloxane structures in the formula (1) is calculated by nuclear magnetic resonance (NMR) measurement.

$n^b$ represents the number of repetitions of each of a $-(O)_z{}^1-R^7-$ structure and a $-R^8-(O)_z{}^2-$ structure in the formula (1). $n^b$ represents an integer of 2 or more and 200 or less, preferably an integer of 3 or more and 40 or less, more preferably an integer of 7 or more and 30 or less, still more preferably an integer of 10 or more and 25 or less, still more preferably an integer of 10 or more and 20 or less.

In the polycarbonate-polyorganosiloxane copolymer (A), the average of $n^b$s, that is, the average number of repetitions of the $-(O)_z{}^1-R^7-$ structure and the $-R^8-(O)_z{}^2-$ structure in the formula (1) is 2 or more and 200 or less, preferably 3 or more and 40 or less, more preferably 7 or more and 30 or less, still more preferably 10 or more and 25 or less, still more preferably 10 or more and 20 or less. The average preferably falls within the above-mentioned ranges because of the ease of availability of a raw material for producing the polycarbonate-polyorganosiloxane copolymer (A). $n^b$ more preferably represents 10 or more because a balance between the mechanical strength and releasability of a molded body of the polycarbonate-polyorganosiloxane copolymer (A) to be obtained can be further improved. In addition, $n^b$ more preferably represents 100 or less because the viscosity and melting point of a polyorganosiloxane at the time of its production fall within suitable ranges, and hence the handleability thereof is further improved. $n^b$ still more preferably represents 50 or less because a physical property-improving effect exhibited when the polycarbonate-polyorganosiloxane copolymer (A) includes a polyorganosiloxane block is further improved.

The average number of repetitions of the $-(O)_z{}^1-R^7-$ structure and the $-R^8-(O)_z{}^2-$structure in the formula (1) is calculated by nuclear magnetic resonance (NMR) measurement.

In the polycarbonate-polyorganosiloxane copolymer (A), the ratio [(average of $n^b$s)/(average of $n^a$s)] of the average of $n^b$s to the average of $n^a$s is 0.2 or more and 0.4 or less. When the ratio of the average of $n^b$s to the average of $n^a$s described above falls within the above-mentioned range, there is obtained a copolymer that is excellent in fluidity, and whose molded body is excellent in impact resistance, tensile elongation, and appearance.

The reason why when the ratio [(average of $n^b$s)/(average of $n^a$s)] of the average of $n^b$s to the average of $n^a$s in the polycarbonate-polyorganosiloxane copolymer (A) of the present invention is 0.2 or more and 0.4 or less, there can be obtained a copolymer that is excellent in fluidity, and whose molded body is excellent in impact resistance, tensile elongation, and appearance is assumed as described below.

It has been known that a polyorganosiloxane structure (A-3) formed of the repetition of a structural unit represented by the following formula (3), the structure being included in the polyorganosiloxane-containing block (A-1) represented by the formula (1), can impart a physical property such as impact resistance to the polycarbonate-polyorganosiloxane copolymer (A). However, the polyorganosiloxane structure (A-3) is a structure having low polarity, and hence its compatibility with the polycarbonate block (A-2) that is a structure having high polarity is insufficient. Thus, it is conceivable that when the content of the polyorganosiloxane structure (A-3) is excessively large, the polyorganosiloxane structure (A-3) is separated from the polycarbonate block (A-2) to form a phase-separated structure, and hence a physical property such as a tensile elongation and the appearance of the molded body become insufficient in some cases.

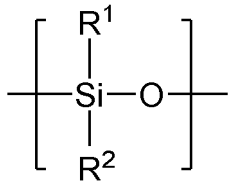

(3)

wherein $R^1$ and $R^2$ each represent the same meaning as that described above.

Meanwhile, the $-(O)_z{}^1-R^7-$ structure and the $-R^8-(O)_z{}^2-$ structure included in the polyorganosiloxane-containing block (A-1) represented by the formula (1) are structures each having high polarity, and hence these structures each have high compatibility with the polycarbonate block (A-2) having high polarity. However, the $-(O)_z{}^1-R^7-$ structure and the $-R^8-(O)_z{}^2-$ structure are relatively flexible structures, and hence each have low strength. Thus, it is conceivable that when the content of such structure is excessively large, the physical properties of the molded body of the polycarbonate-polyorganosiloxane copolymer (A) such as impact resistance become insufficient in some cases.

Accordingly, it is conceivable that when the ratio between the average chain length of the polyorganosiloxane structures included in the polycarbonate-polyorganosiloxane copolymer (A) of the present invention and the average number of repetitions of the $-(O)_z{}^1-R^7-$structure and the $-R^8-(O)_z{}^2-$ structure included therein is set within a predetermined range, there is obtained the polycarbonate-polyorganosiloxane copolymer (A) that is excellent in fluidity, and whose molded body is excellent in impact resistance, tensile elongation, and appearance.

In the polycarbonate-polyorganosiloxane copolymer (A) of the present invention, the ratio [(average of $n^b$s)/(average of $n^a$s)] of the average of $n^b$s to the average of $n^a$s is 0.2 or more. Thus, it is conceivable that the content of the $-(O)_z{}^1-R^7-$ structure and the $-R^8-(O)_z{}^2-$ structure each having high polarity is so large as compared to the content of the polyorganosiloxane structure (A-3) having low polarity that the polyorganosiloxane structure (A-3) and the polycarbonate block (A-2) are sufficiently compatible with each other. Accordingly, it is conceivable that the polyorganosiloxane-containing block (A-1) does not form a phase-separated structure in the resin structure of the polycarbonate-polyorganosiloxane copolymer (A), and hence a physical property such as an excellent tensile elongation and an appearance such as the color tone of the molded body can be achieved.

In addition, in the polycarbonate-polyorganosiloxane copolymer (A) of the present invention, the ratio [(average of $n^b$s)/(average of $n^a$s)] of the average of $n^b$s to the average of $n^a$s is 0.4 or less. Thus, it is conceivable that the content of the $-(O)_z{}^1-R^7-$ structure and the $-R^8-(O)_z{}^2-$ structure is so small as compared to the content of the polyorganosiloxane structure (A-3) that the polycarbonate-polyorganosiloxane copolymer (A) can achieve a physical property such as excellent impact resistance of the molded body thereof.

The ratio [(average of $n^b$s)/(average of $n^a$s)] of the average of $n^b$s to the average of $n^a$s is preferably 0.22 or more and 0.35 or less, more preferably 0.24 or more and 0.30 or less. When the ratio of the average of $n^b$s to the average of $n^a$s falls within the above-mentioned preferred ranges, there can be obtained the polycarbonate-polyorganosiloxane copolymer (A) that is more excellent in fluidity, and whose molded body is more excellent in impact resistance, tensile elongation, and appearance.

Examples of the divalent aliphatic hydrocarbon group having 2 to 40 carbon atoms that is represented by $R^{10}$ in the formula (2) include an ethylene group, a n-propylene group, an isopropylene group, a n-butylene group, an isobutylene group, a n-pentylene group, a n-hexylene group, a n-heptylene group, a n-octylene group, a 2-ethylhexylene group, a n-nonylene group, a n-decylene group, a n-undecylene group, a n-dodecylene group, a n-tridecylene group, a n-tetradecylene group, a n-pentadecylene group, a n-hexadecylene group, a n-heptadecylene group, and a n-octadecylene group. However, those groups may each be substituted with a substituent, and may each contain at least one atom selected from the group consisting of: an oxygen atom; a nitrogen atom; a sulfur atom; and a halogen atom.

Examples of the divalent alicyclic hydrocarbon group having 3 to 40 carbon atoms that is represented by $R^{10}$ in the formula (2) include a cyclopentylene group, a cyclohexylene group, a cyclooctylene group, a cyclodecylene group, a cyclotetradecylene group, an adamantylene group, a bicycloheptylene group, a bicyclodecylene group, and a tricyclodecylene group. However, those groups may each be substituted with a substituent, and may each contain at least one atom selected from the group consisting of: an oxygen atom; a nitrogen atom; a sulfur atom; and a halogen atom.

Examples of the divalent aromatic hydrocarbon group having 6 to 20 carbon atoms that is represented by $R^{10}$ in the formula (2) may include divalent aromatic hydrocarbon groups derived from 2,2-bis(4-hydroxyphenyl)propane (also referred to as "bisphenol A"), 2,2-bis(4-hydroxy-3-methylphenyl)propane (also referred to as "bisphenol C"), 1,1-bis(4-hydroxyphenyl)cyclohexane (also referred to as "bisphenol Z"), 1,1-bis(4-hydroxyphenyl)-3-methylcyclohexane (also referred to as "bisphenol 3MZ"), 1,1-bis(4-hydroxyphenyl)-3,3,5-trimethylcyclohexane (also referred to as "bisphenol HTG"), 1,1-bis(4-hydroxyphenyl)cyclododecene, hydroquinone, resorcinol, and catechol. However, those groups may each be substituted with a substituent, and may each contain at least one atom selected from the group consisting of: an oxygen atom; a nitrogen atom; a sulfur atom; and a halogen atom.

The polycarbonate block (A-2) formed of the repetition of the constituent unit represented by the formula (2)

preferably includes the repetition of a constituent unit represented by the formula (111):

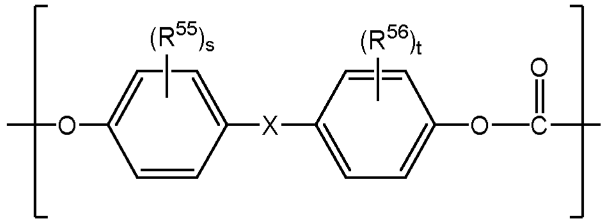

(111)

wherein $R^{55}$ and $R^{56}$ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, an arylene group having 6 to 20 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O-, or -CO-, and "s" and "t" each independently represent an integer of from 0 to 4.

Examples of the halogen atom represented by any one of $R^{55}$ and $R^{56}$ include a fluorine atom, a chlorine atom, a bromine atom, and an iodine atom.

Examples of the alkyl group having 1 to 6 carbon atoms that is represented by any one of $R^{55}$ and $R^{56}$ include a methyl group, an ethyl group, a n-propyl group, an isopropyl group, various butyl groups, various pentyl groups, and various hexyl groups. The alkoxy group having 1 to 6 carbon atoms represented by any one of $R^{55}$ and $R^{56}$ is, for example, an alkoxy group whose alkyl group moiety is the same as the alkyl group.

Examples of the alkylene group having 1 to 8 carbon atoms that is represented by X include a methylene group, an ethylene group, a trimethylene group, a tetramethylene group, and a hexamethylene group. Among them, an alkylene group having 1 to 5 carbon atoms is preferred. Examples of the alkylidene group having 2 to 8 carbon atoms that is represented by X include an ethylidene group and an isopropylidene group. Examples of the cycloalkylene group having 5 to 15 carbon atoms that is represented by X include a cyclopentanediyl group, a cyclohexanediyl group, and a cyclooctanediyl group. Among them, a cycloalkylene group having 5 to 10 carbon atoms is preferred. Examples of the arylene group having 6 to 20 carbon atoms that is represented by X include a phenylene group, a naphthylene group, and a biphenylene group. Examples of the cycloalkylidene group having 5 to 15 carbon atoms that is represented by X include a cyclohexylidene group, a 3,5,5-trimethylcyclohexylidene group, and a 2-adamantylidene group. Among them, a cycloalkylidene group having 5 to 10 carbon atoms is preferred, and a cycloalkylidene group having 5 to 8 carbon atoms is more preferred. The arylalkylene group having 7 to 15 carbon atoms that is represented by X is, for example, an arylalkylene group whose aryl moiety is an aryl group having 6 to 14 ring-forming carbon atoms, such as a phenyl group, a naphthyl group, a biphenyl group, or an anthryl group, and whose alkylene moiety is the same as the alkylene group. The arylalkylidene group having 7 to 15 carbon atoms that is represented by X is, for example, an arylalkylidene group whose aryl moiety is an aryl group having 6 to 14 ring-forming carbon atoms, such as a phenyl group, a naphthyl group, a biphenyl group, or an anthryl group, and whose alkylidene moiety is the same as the alkylidene group.

"s" and "t" each independently represent an integer of from 0 to 4, preferably from 0 to 2, more preferably 0 or 1. Among them, it is preferred that "s" and "t" each represent 0, and X represent a single bond or an alkylene group having 1 to 8 carbon atoms, or it is preferred that "s" and "t" each represent 0, and X represent an alkylidene group, and it is still more preferred that "s" and "t" each represent 0, and X represent an isopropylidene group.

The polycarbonate block (A-2) formed of the repetition of the constituent unit represented by the formula (2) may include a structural unit except the structural unit represented by the formula (111). Specifically, the polycarbonate block (A-2) formed of the repetition of the constituent unit represented by the formula (2) may further include a structural unit represented by the formula (112):

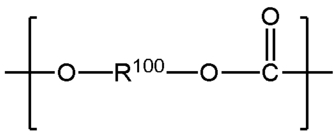

(112)

wherein $R^{100}$ represents a divalent aliphatic hydrocarbon group having 2 to 40 carbon atoms, and the divalent aliphatic hydrocarbon group may contain at least one selected from the group consisting of: a branched structure; and a cyclic structure, and may contain at least one atom selected from the group consisting of: an oxygen atom; a nitrogen atom; a sulfur atom; and a halogen atom.

Examples of the divalent aliphatic hydrocarbon group having 2 to 40 carbon atoms that is represented by $R^{100}$

include an alkylene group having 2 to 40 carbon atoms, a cycloalkylene group having 4 to 40 carbon atoms, and an oxygen- or nitrogen-containing divalent saturated heterocyclic group having 4 to 40 carbon atoms. The number of the carbon atoms of the alkylene group is preferably from 2 to 18, more preferably from 2 to 10, still more preferably from 3 to 6. The number of the carbon atoms of the cycloalkylene group is preferably from 4 to 20, more preferably from 5 to 20. The number of the carbon atoms of the oxygen- or nitrogen-containing divalent saturated heterocyclic group is preferably from 4 to 20, more preferably from 5 to 20. However, those groups may each contain at least one selected from the group consisting of: a branched structure; and a cyclic structure, and may each contain at least one atom selected from the group consisting of: an oxygen atom; a nitrogen atom; a sulfur atom; and a halogen atom.

Examples of the alkylene group having 2 to 40 carbon atoms include an ethylene group, a n-propylene group, an isopropylene group, a n-butylene group, an isobutylene group, a n-pentylene group, a n-hexylene group, a n-heptylene group, a n-octylene group, a 2-ethylhexylene group, a n-nonylene group, a n-decylene group, a n-undecylene group, a n-dodecylene group, a n-tridecylene group, a n-tetradecylene group, a n-pentadecylene group, a n-hexadecylene group, a n-heptadecylene group, and a n-octadecylene group. Examples of the cycloalkylene group having 4 to 40 carbon atoms include a cyclopentylene group, a cyclohexylene group, a cyclooctylene group, a cyclodecylene group, a cyclotetradecylene group, an adamantylene group, a bicycloheptylene group, a bicyclodecylene group, and a tricyclodecylene group. The oxygen- or nitrogen-containing divalent heterocyclic group having 4 to 40 carbon atoms may be, for example, a group containing an oxygen or nitrogen atom in the skeleton of the cycloalkylene group.

Specific examples of the structural unit represented by the formula (112) include structural units represented by the following formulae (a-i) to (a-xiii).

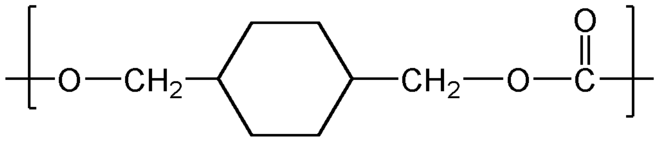
(a-i)

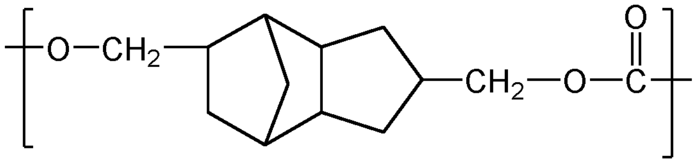
(a-ii)

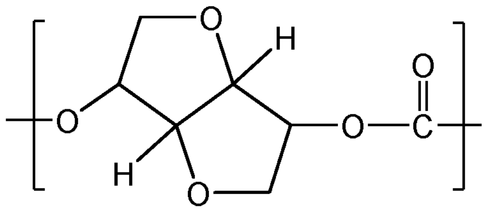
(a-iii)

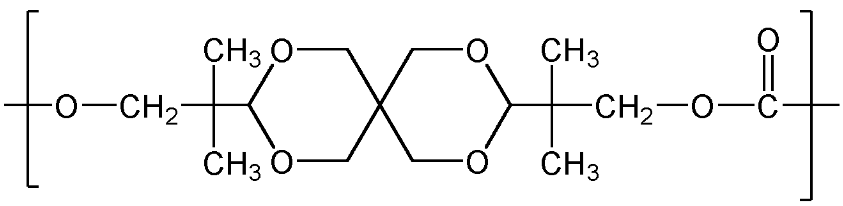
(a-iv)

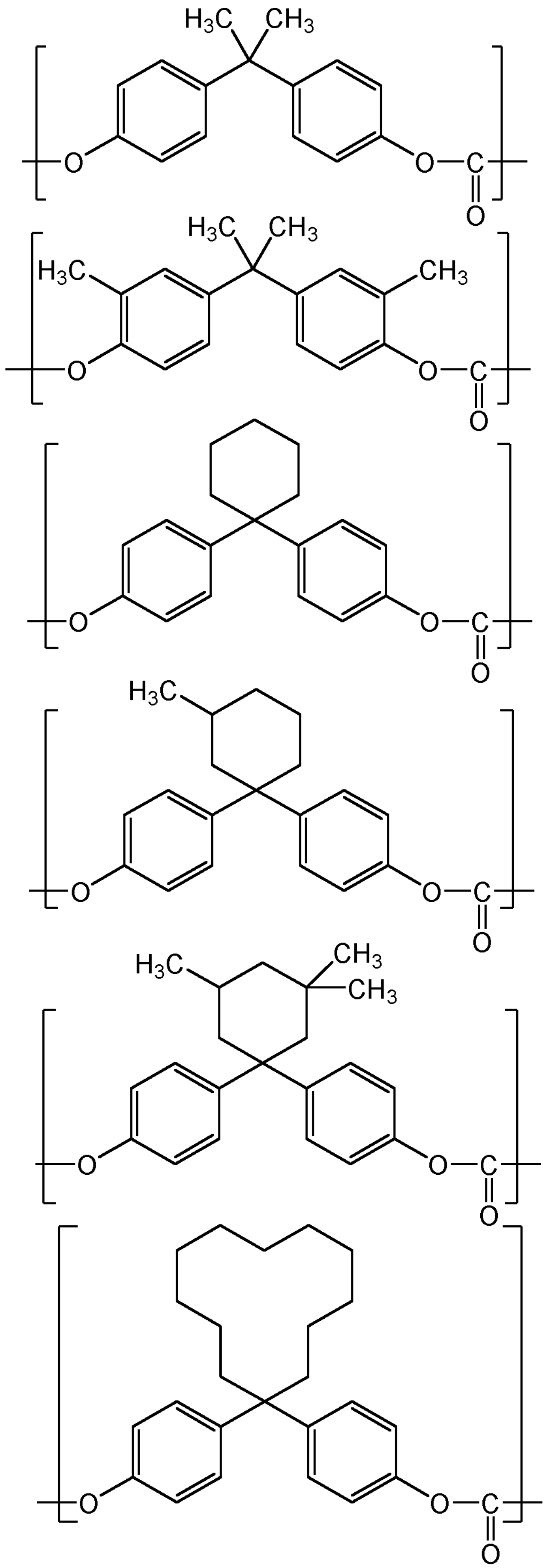

(a-v)

(a-vi)

(a-vii)

(a-viii)

(a-ix)

(a-x)

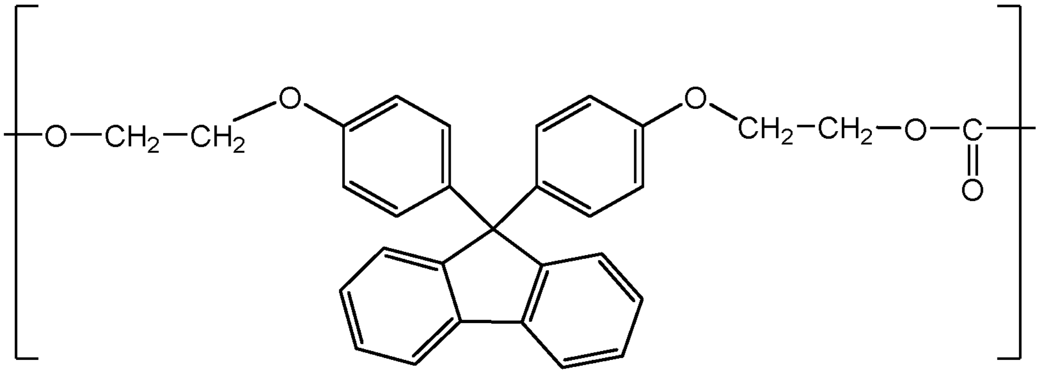

(a-xi)

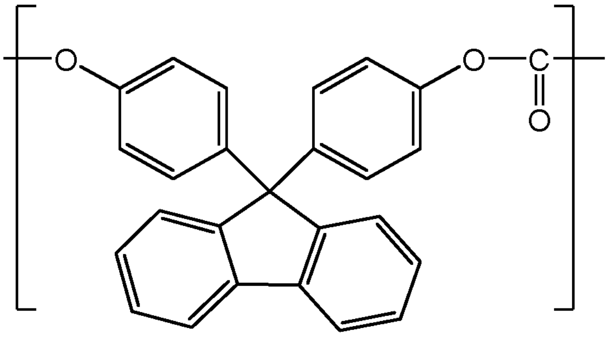

(a-xii)

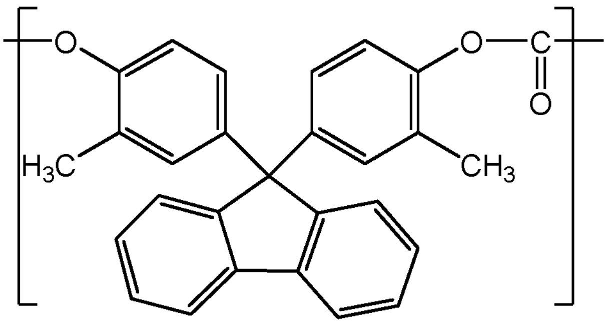

(a-xiii)

The polycarbonate block (A-2) formed of the repetition of the constituent unit represented by the formula (2) preferably includes a structural unit derived from at least one compound selected from the group consisting of: 2,2-bis(4-hydroxyphenyl)propane; 2,2-bis(4-hydroxy-3-methylphenyl)propane; 1,1-bis(4-hydroxyphenyl)cyclohexane; 1,1-bis(4-hydroxyphenyl)-3-methylcyclohexane; 1,1-bis(4-hydroxyphenyl)-3,3,5-trimethylcyclohexane; 1,1-bis(4-hydroxyphenyl) cyclododecene; isosorbide; cyclohexane-1,4-dimethanol; tricyclodecane dimethanol; 3,9-bis(1,1-dimethyl-2-hydroxyethyl)-2,4,8,10-tetraoxaspiro[5.5]undecane; 1,3-propanediol; and 1,4-butanediol.

The polycarbonate block (A-2) preferably includes the structural unit represented by the formula (2) as a main component. The polycarbonate block (A-2) includes preferably 50 mass% or more, more preferably 80 mass% or more, still more preferably 90 mass% or more, still more preferably 98 mass% or more of the structural unit represented by the formula (2) with respect to the polyorganosiloxane-containing block (A-1). It is still more preferred that the polycarbonate block (A-2) be formed only of the repetition of the constituent unit represented by the formula (2). It is particularly preferred that the block be formed only of the repetition of the constituent unit represented by the formula (111) among such units.

In the polycarbonate-polyorganosiloxane copolymer (A), the polyorganosiloxane-containing block (A-1) and the polycarbonate block (A-2) are preferably bonded to each other through a carbonate bond (-O-C(=O)-O- group). For example, when the polyorganosiloxane-containing block (A-1) includes the constituent unit represented by the formula (1), the constituent unit represented by the formula (1) is directly bonded to the adjacent polycarbonate block (A-2) through a carbonate bond.

As used herein, a structure represented by a chemical formula may come in, for example, an optical isomer and a stereoisomer in accordance with the presence of an asymmetric center. In this case, all isomers and a mixture thereof are included herein.

For example, the structural unit represented by the formula (a-iii) preferably includes a structural unit represented

by the following formula (a-iii'), and is more preferably formed only of the structural unit represented by the following formula (a-iii').

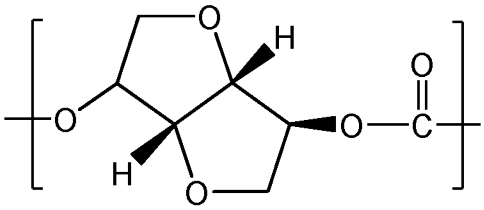

(a-iii')

The content of the polyorganosiloxane-containing block (A-1) in the polycarbonate-polyorganosiloxane copolymer (A) is 2 mass% or more and 30 mass% or less. When the content of the polyorganosiloxane-containing block (A-1) falls within the above-mentioned range, a copolymer having excellent fluidity and excellent impact resistance of a molded body thereof can be obtained.

The content of the polyorganosiloxane-containing block (A-1) in the polycarbonate-polyorganosiloxane copolymer (A) is preferably 2.5 mass% or more and 20 mass% or less, more preferably 3 mass% or more and 15 mass% or less, still more preferably 3 mass% or more and 10 mass% or less. When the content of the polyorganosiloxane-containing block (A-1) falls within the above-mentioned preferred ranges, there can be obtained a copolymer that is more excellent in fluidity, and whose molded body is more excellent in impact resistance, tensile elongation, and appearance.

The expression "content of the polyorganosiloxane-containing block (A-1) in the polycarbonate-polyorganosiloxane copolymer (A)" as used herein refers to the percentage of the total mass of the structural unit represented by the formula (3) and a structural unit represented by the following formula (Y) with respect to the total mass of the polycarbonate block (A-2), the structural unit represented by the formula (3), the structural unit represented by the following formula (Y), and a terminal structure derived from a terminal stopper to be described later, the stopper being included in the polycarbonate-polyorganosiloxane copolymer (A) as required.

$$-\left[R^Y-(O)_{z^0}\right]- \quad (Y)$$

wherein $R^Y$ represents $R^7$ or $R^8$, when $R^Y$ represents $R^8$, $z^0$ represents $z^2$, and when $R^Y$ represents $R^7$, $z^0$ represents $z^1$, and $R^7$, $R^8$, $z^1$, and $z^2$ each represent the same meaning as that described above.

The content of the polyorganosiloxane structure (A-3) formed of the repetition of the constituent unit represented by the formula (3), the structure being included in the polyorganosiloxane-containing block (A-1), in the polycarbonate-polyorganosiloxane copolymer (A) is preferably 0.1 mass% or more and 30 mass% or less, more preferably 0.5 mass% or more and 15 mass% or less, still more preferably 1.0 mass% or more and 10 mass% or less. When the content of the polyorganosiloxane structure falls within the above-mentioned preferred ranges, a copolymer having more excellent impact resistance of a molded body thereof can be obtained.

The expression "content of the polyorganosiloxane structure (A-3) formed of the repetition of the constituent unit represented by the formula (3), the structure being included in the polyorganosiloxane-containing block (A-1), in the polycarbonate-polyorganosiloxane copolymer (A)" as used herein refers to the percentage of the total mass of the structural unit represented by the formula (3) with respect to the total mass of the polycarbonate-block (A-2), the structural unit represented by the formula (3), the structural unit represented by the formula (Y), and a terminal structure derived from a terminal stopper to be described later, the stopper being included in the polycarbonate-polyorganosiloxane copolymer (A) as required.

The content of the polycarbonate block (A-2) in the polycarbonate-polyorganosiloxane copolymer (A) is preferably 40 mass% or more, more preferably 60 mass% or more, still more preferably 80 mass% or more, still more preferably 90 mass% or more, and is preferably 99.9 mass% or less, more preferably 99.5 mass% or less, still more preferably 99.0 mass% or less, still more preferably 97.0 mass% or less.

The viscosity-average molecular weight of the polycarbonate-polyorganosiloxane copolymer (A) is preferably 15,000 or more and 30,000 or less, more preferably 17,000 or more and 27,000 or less, still more preferably 18,000 or more and 25,000 or less, still more preferably 19,000 or more and 24,000 or less, still more preferably 20,500 or more and 23,000 or less.

The viscosity-average molecular weight (Mv) herein is a value calculated from the following Schnell's equation by measuring the limiting viscosity [η] of a methylene chloride solution (concentration: g/L) at 20°C.

$$[\eta] = 1.23 \times 10^{-5} Mv^{0.83}$$

<Method of producing Polycarbonate-polyorganosiloxane Copolymer (A)>

The polycarbonate-polyorganosiloxane copolymer (A) of the present invention may be produced by using, for example, a diol monomer (a1) and a polyorganosiloxane (a2) as raw material monomers.

<<Diol Monomer (a1)>>

The above-mentioned diol monomer (a1) is not particularly limited as long as the monomer has a structure represented by the following formula (a1). An aromatic dihydroxy compound or an aliphatic dihydroxy compound may be used as the diol monomer (a1).

$$HO\text{-}R^{10}\text{-}OH \qquad (a1)$$

$R^{10}$ in the formula (a1) is as described above, and preferred examples thereof are also the same as those described above.

<<Polyorganosiloxane (a2)>>

The polyorganosiloxane (a2) preferably has a structure represented by any one of the following formulae (a2-1) to (a2-3):

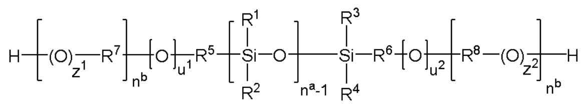

(a2-1)

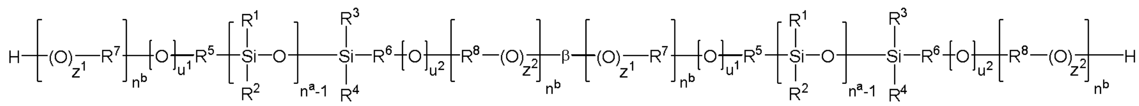

(a2-2)

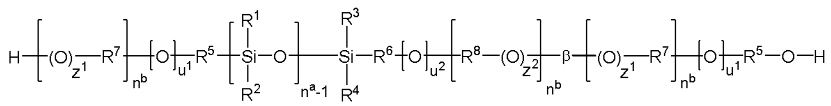

(a2-3)

wherein $R^1$ to $R^8$, $z^1$, $z^2$, $u^1$, $u^2$, $n^a$, $n^b$, and $\beta$ each represent the same meaning as that described above.

A method of producing the polyorganosiloxane (a2) is not particularly limited. According to, for example, a method described in JP 11-217390 A, the polyorganosiloxane may be obtained by: causing a cyclotrisiloxane and a disiloxane to react with each other in the presence of an acidic catalyst to synthesize an $\alpha,\omega$-dihydrogen organopentasiloxane; and then subjecting the $\alpha,\omega$-dihydrogen organopentasiloxane to an addition reaction with an oligomer or a polymer (e.g., a polyalkylene ether, a polyester, or a polycarbonate) having one terminal modified with an allyl group in the presence of a catalyst for a hydrosilylation reaction. In addition, according to a method described in JP 2662310 B2, the polyorganosiloxane may be obtained by: causing octamethylcyclotetrasiloxane and tetramethyldisiloxane to react with each other in the presence of sulfuric acid (acidic catalyst); and subjecting the resultant $\alpha,\omega$-dihydrogen organopolysiloxane to an addition reaction with the oligomer or the polymer having one terminal modified with an allyl group in the presence of the catalyst for a hydrosilylation reaction in the same manner as that described above. The $\alpha,\omega$-dihydrogen organopolysiloxane may be used after its average number $n^a$ of repetitions has been appropriately adjusted by its polymerization conditions, or a commercially available $\alpha,\omega$-dihydrogen organopolysiloxane may be used. In addition, the oligomer having one terminal modified with an allyl group may be used after its average number $n^b$ of repetitions has been appropriately adjusted by its polymerization conditions, or a commercially available one-terminal allyl group-modified oligomer may be used. A one-terminal allyl group-modified polyethylene glycol out of the one-terminal allyl group-modified oligomers may be produced with reference to, for example, JP 5652691 B2. In addition, a commercially available allyl group-modified polyethylene glycol is, for example, UNIOX PKA-5001, UNIOX PKA-5002, UNIOX PKA-5003, UNIOX PKA-5004, or UNIOX PKA-5005 manufactured by NOF Corporation.

The polycarbonate-polyorganosiloxane copolymer (A) may be produced through the polymerization of raw material monomers by an interfacial polymerization method or a melt polymerization method (ester exchange method).

The polycarbonate-polyorganosiloxane copolymer (A) is preferably obtained by the melt polymerization method. When the polycarbonate-polyorganosiloxane copolymer (A) is produced by the interfacial polymerization method, a method described in, for example, JP 2014-80462 A may be adopted. The polycarbonate-polyorganosiloxane copolymer (A) may be produced by causing the polyorganosiloxane (a2), the diol monomer (a1), and a carbonic acid ester compound, which are raw material monomers, to react with each other by the melt polymerization method preferably in the presence of a basic catalyst. At this time, the polymerization reaction may be performed by further adding a terminal stopper.

Accordingly, the present invention also provides a method of producing the polycarbonate-polyorganosiloxane copolymer (A) including a step of causing the polyorganosiloxane (a2), the diol monomer (a1), and the carbonic acid ester compound to react with each other by the melt polymerization method. The above-mentioned step of causing the monomers to react with each other by the melt polymerization method is preferably performed in the presence of a basic catalyst.

The melt polymerization method is preferred from the viewpoints of an environmental load and economical efficiency because the method does not require a solvent such as methylene chloride that tends to have a high environmental load and to be expensive. In addition, the method is preferred from the viewpoint of safety at the time of the production because the method does not involve the use of phosgene having high toxicity as a carbonate source.

The melt polymerization method is environmentally and economically advantageous because the method does not require a solvent such as methylene chloride required in the interfacial polymerization method. In addition, the melt polymerization method is advantageous in terms of production because the method does not involve the use of phosgene having high toxicity to be used as a carbonate source in the interfacial polymerization method.

(Carbonic Acid Ester Compound)

Examples of the carbonic acid ester compound may include a diaryl carbonate compound, a dialkyl carbonate compound, and an alkyl aryl carbonate compound.

Examples of the diaryl carbonate compound include a compound represented by the following formula (11) and a compound represented by the following formula (12):

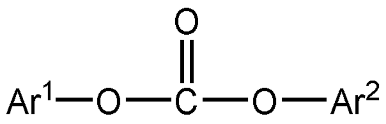

(11)

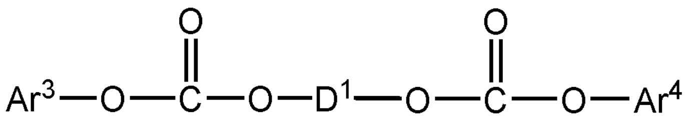

(12)

wherein in the formula (11), $Ar^1$ and $Ar^2$ each represent an aryl group, and the groups may be identical to or different from each other, and in the formula (12), $Ar^3$ and $Ar^4$ each represent an aryl group, and the groups may be identical to or different from each other, and $D^1$ represents a residue obtained by removing two hydroxyl groups from the aromatic dihydroxy compound or the aliphatic dihydroxy compound.

Examples of the dialkyl carbonate compound include a compound represented by the following formula (13) and a compound represented by the following formula (14):

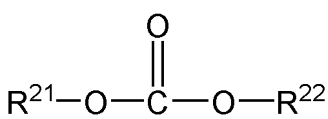

(13)

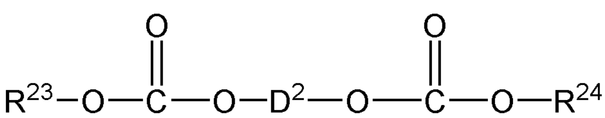

(14)

wherein in the formula (13), $R^{21}$ and $R^{22}$ each represent an alkyl group having 1 to 20 carbon atoms or a cycloalkyl group having 4 to 20 carbon atoms, and the groups may be identical to or different from each other, and in the formula (14), $R^{23}$ and $R^{24}$ each represent an alkyl group having 1 to 20 carbon atoms or a cycloalkyl group having 4 to 20 carbon atoms, and the groups may be identical to or different from each other, and $D^2$ represents a residue obtained by removing two hydroxyl

groups from the aromatic dihydroxy compound or the aliphatic dihydroxy compound.

Examples of the alkyl aryl carbonate compound include a compound represented by the following formula (15) and a compound represented by the following formula (16):

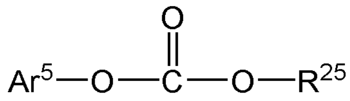

(15)

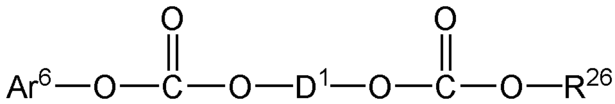

(16)

wherein in the formula (15), $Ar^5$ represents an aryl group, and $R^{25}$ represents an alkyl group having 1 to 20 carbon atoms, or a cycloalkyl group having 4 to 20 carbon atoms, and in the formula (16), $Ar^6$ represents an aryl group, $R^{26}$ represents an alkyl group having 1 to 20 carbon atoms, or a cycloalkyl group having 4 to 20 carbon atoms, and $D^1$ represents a residue obtained by removing two hydroxy groups from the aromatic dihydroxy compound or the aliphatic dihydroxy compound.

Examples of the diaryl carbonate compound include diphenyl carbonate, ditolyl carbonate, bis(chlorophenyl) carbonate, bis(m-cresyl) carbonate, dinaphthyl carbonate, bis(diphenyl) carbonate, and bisphenol A bisphenyl carbonate.

Examples of the dialkyl carbonate compound include diethyl carbonate, dimethyl carbonate, dibutyl carbonate, dicyclohexyl carbonate, and bisphenol A bismethyl carbonate.

Examples of the alkyl aryl carbonate compound include methyl phenyl carbonate, ethyl phenyl carbonate, butyl phenyl carbonate, cyclohexyl phenyl carbonate, and bisphenol A methyl phenyl carbonate.

A preferred carbonic acid ester compound is diphenyl carbonate.

One or two or more kinds of carbonic acid ester compounds may be used in the production of the polycarbonate-polyorganosiloxane copolymer (A).

(Terminal Stopper)

In the production of the polycarbonate-polyorganosiloxane copolymer (A), a terminal stopper may be used as required. Any known terminal stopper in the production of a polycarbonate resin may be used as the terminal stopper. Specific examples thereof may include the following compounds: phenol, p-cresol, p-tert-butylphenol, p-tert-octylphenol, p-cumylphenol, p-nonylphenol, and p-tert-amylphenol. Those monohydric phenols may be used alone or in combination thereof.

(Branching Agent)

In the production of the polycarbonate-polyorganosiloxane copolymer (A), a branching agent may be used. Examples of the branching agent include phloroglucin, trimellitic acid, 1,1,1-tris(4-hydroxyphenyl)ethane, 1-[α-methyl-α-(4'-hydroxyphenyl)ethyl]-4-[α',α'-bis(4"-hydroxyphenyl)ethyl]benzene, α,α',α"-tris(4-hydroxyphenyl)-1,3,5-triisopropylbenzene, and isatinbis(o-cresol).

Specifically, the polycarbonate-polyorganosiloxane copolymer (A) may be produced by the melt polymerization method in accordance with, for example, the following procedure.

The diol monomer (a1), the polyorganosiloxane (a2), and the carbonic acid ester compound are subj ected to an ester exchange reaction. The molar amount of the carbonic acid ester compound is preferably from 0.9 times to 1.2 times, more preferably from 0.98 times to 1.02 times as large as that of the diol monomer.

At the time of the ester exchange reaction, the terminal stopper is preferably present in an amount within the range of from 0.05 mol% to 10 mol% with respect to the total amount of the diol monomer (a1) and the polyorganosiloxane (a2) from the viewpoint that the hydroxy group terminal of the polycarbonate-polyorganosiloxane copolymer to be obtained is sufficiently sealed, and hence a polycarbonate resin excellent in heat resistance and water resistance is obtained. The terminal stopper is more preferably present in an amount of from 1 mol% to 6 mol% with respect to the total amount of the diol monomer (a1) and the polyorganosiloxane (a2). The total amount of the terminal stopper may be added to a reaction system in advance, or the following may be adopted: part of the terminal stopper is added to the reaction system in advance, and the remainder thereof is added thereto along with the progress of the reaction.

The ester exchange reaction is preferably performed in the presence of an antioxidant by simultaneously loading the antioxidant into a reactor together with the diol monomer (a1), the polyorganosiloxane (a2), and the carbonic acid ester compound. Thus, for example, the deterioration of the diol monomer due to heat, oxidation, or the like in a heat-melting step before catalyst addition, and the deterioration of the diol monomer and the polycarbonate-polyorganosiloxane copolymer

to be obtained due to heat, oxidation, or the like in a polymerization step after the catalyst addition can be reduced. Thus, a polycarbonate-polyorganosiloxane copolymer that is more excellent in appearance such as color tone can be obtained, and such an effect as described below is obtained: the production of an undesired gel component can be reduced.

When the ester exchange reaction is performed, a reaction temperature is not particularly limited, and the temperature may fall within, for example, the range of from 100°C to 330°C, and falls within preferably the range of from 180°C to 300°C, more preferably the range of from 200°C to 240°C. In addition, a method including gradually increasing the temperature to from 180°C to 300°C in accordance with the progress of the reaction is preferred. When the temperature of the ester exchange reaction is 100°C or more, a reaction rate sufficiently increases. Meanwhile, when the temperature is 330°C or less, the occurrence of a side reaction reduces and a problem of a poor appearance such as the coloring of the polycarbonate-polyorganosiloxane copolymer to be produced hardly occurs.

A reaction pressure is set depending on the vapor pressure of a monomer to be used or the reaction temperature. The pressure is not particularly limited as long as the pressure is set so that the reaction may be efficiently performed. For example, the following is adopted: at the initial stage of the reaction, it is preferred that the pressure be set to an atmospheric pressure (normal pressure) or pressurized state ranging from 1 atm to 50 atm (760 torr to 38,000 torr), and at the later stage of the reaction, the pressure be set to a decompressed state, and be set to from 1.33 Pa to $1.33 \times 10^4$ Pa (0.01 torr to 100 torr) in the end.

The reaction only needs to be performed until a target molecular weight is obtained, and a reaction time is, for example, from 0.2 hour to 10 hours.

The ester exchange reaction, which is performed, for example, in the absence of an inert solvent, may be performed in the presence of 1 part by mass to 150 parts by mass of the inert solvent with respect to 100 parts by mass of the polycarbonate resin to be obtained as required. Examples of the inert solvent include: aromatic compounds, such as diphenyl ether, halogenated diphenyl ether, benzophenone, polyphenyl ether, dichlorobenzene, and methylnaphthalene; and cycloalkanes, such as tricyclo[5.2.1.$0^{2,6}$]decane, cyclooctane, and cyclodecane.

The reaction may be performed under an inert gas atmosphere as required, and examples of the inert gas include various gases including: gases, such as argon, carbon dioxide, dinitrogen monoxide, and nitrogen; alkanes, such as chlorofluorohydrocarbons, ethane, and propane; and alkenes, such as ethylene and propylene.

In the melt polymerization method, the basic catalyst is preferably used as a catalyst. The basic catalyst may be, for example, at least one kind selected from the group consisting of: a metal catalyst, such as an alkali metal compound or an alkaline earth metal compound; a nitrogen-containing compound; an organic catalyst such as a quaternary phosphonium salt containing an aryl group; and a metal compound. Those compounds may be used alone or in combination thereof.

As the basic catalyst, there is preferably used, for example, any one of the following catalysts: an organic acid salt, an inorganic salt, an oxide, a hydroxide, a hydride, and an alkoxide of an alkali metal or an alkaline earth metal; a quaternary ammonium hydroxide; and a quaternary phosphonium salt containing an aryl group. The basic catalysts may be used alone or in combination thereof.

Examples of the alkali metal compound include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium benzoate, potassium benzoate, cesium benzoate, lithium benzoate, disodium hydrogen phosphate, dipotassium hydrogen phosphate, dilithium hydrogen phosphate, disodium phenyl phosphate, disodium salt, dipotassium salt, dicesium salt, or dilithium salt of bisphenol A, and sodium salt, potassium salt, cesium salt, or lithium salt of phenol.

Examples of the alkaline earth metal compound include magnesium hydroxide, calcium hydroxide, strontium hydroxide, barium hydroxide, magnesium carbonate, calcium carbonate, strontium carbonate, barium carbonate, magnesium diacetate, calcium diacetate, strontium diacetate, and barium diacetate.

Examples of the nitrogen-containing compound include: quaternary ammonium hydroxides having alkyl and aryl groups, such as tetramethylammonium hydroxide, tetraethylammonium hydroxide, tetrapropylammonium hydroxide, tetrabutylammonium hydroxide, and trimethylbenzylammonium hydroxide; tertiary amines, such as triethylamine, dimethylbenzylamine, and triphenylamine; imidazoles, such as 2-methylimidazole, 2-phenylimidazole, and benzimidazole; and bases or basic salts, such as ammonia, tetramethylammonium borohydride, tetrabutylammonium borohydride, tetrabutylammonium tetraphenylborate, and tetraphenylammonium tetraphenylborate.

Examples of the metal compound include a zinc-aluminum compound, a germanium compound, an organotin compound, an antimony compound, a manganese compound, a titanium compound, and a zirconium compound.

Specific examples of the quaternary phosphonium salt containing an aryl group include: tetra(aryl or alkyl) phosphonium hydroxides, such as tetraphenylphosphonium hydroxide, tetranaphthylphosphonium hydroxide, tetra(chlorophenyl)phosphonium hydroxide, tetra(biphenyl)phosphonium hydroxide, tetratolylphosphonium hydroxide, tetramethylphosphonium hydroxide, tetraethylphosphonium hydroxide, and tetrabutylphosphonium hydroxide; and tetramethylphosphonium tetraphenylborate, tetraphenylphosphonium bromide, tetraphenylphosphonium phenolate,

tetraphenylphosphonium tetraphenylborate, methyltriphenylphosphonium tetraphenylborate, benzyltriphenylphosphonium tetraphenylborate, biphenyltriphenylphosphonium tetraphenylborate, tetratolylphosphonium tetraphenylborate, tetraphenylphosphonium phenolate, tetra(p-t-butylphenyl)phosphonium diphenylphosphate, triphenylbutylphosphonium phenolate, and triphenylbutylphosphonium tetraphenylborate.

The quaternary phosphonium salt containing an aryl group is preferably combined with a nitrogen-containing organic basic compound, and for example, a combination of tetramethylammonium hydroxide and tetraphenylphosphonium tetraphenylborate is preferred.

The usage amount of the basic catalyst may be selected from the range of preferably from $1\times10^{-9}$ mol to $1\times10^{-2}$ mol, more preferably from $1\times10^{-8}$ mol to $1\times10^{-2}$ mol, still more preferably from $1\times10^{-7}$ mol to $1\times10^{-3}$ mol with respect to 1 mol of the diol monomer (a1).

A catalyst deactivator may be added at the later stage of the reaction. A known catalyst deactivator is effectively used as the catalyst deactivator to be used. Examples of the catalyst deactivator include a sulfonic acid ammonium salt and a sulfonic acid phosphonium salt.

When at least one kind of polymerization catalyst selected from alkali metal compounds and alkaline earth metal compounds is used, regarding the usage amount of the catalyst deactivator, the catalyst deactivator may be used at a ratio of preferably from 0.5 mol to 50 mol, more preferably from 0.5 mol to 10 mol, still more preferably from 0.8 mol to 5 mol per 1 mol of the catalyst.

The antioxidant is preferably mixed after the catalyst deactivator has been added to terminate the polymerization reaction. When the antioxidant is mixed after the termination of the polymerization reaction, and then the resultant polycarbonate-polyorganosiloxane copolymer is removed from a reactor, the deterioration of the polycarbonate-polyorganosiloxane copolymer due to heat, oxygen, or the like in a subsequent compound step and a step of obtaining a molded body can be reduced. Thus, a resin pellet and a molded body that are each more excellent in appearance such as color tone or surface appearance can be obtained, and such an effect as described below is obtained: the production of an undesired gel component can be reduced.

The reaction in the melt polymerization method may be performed by any one of a continuous system and a batch system. A reactor to be used in melt polymerization may be any one of: a vertical reactor equipped with, for example, an anchor-type stirring blade, a max blend stirring blade, or a helical ribbon-type stirring blade; and a horizontal reactor equipped with, for example, a paddle blade, a lattice blade, or a spectacle blade. Further, the reactor may be of an extruder type equipped with a screw. In the case of the continuous system, an appropriate combination of such reactors is preferably used.

<Polycarbonate-based Resin Composition>

The polycarbonate-based resin composition of the present invention includes the above-mentioned polycarbonate-polyorganosiloxane copolymer (polycarbonate-polyorganosiloxane copolymer (A)).

A well-known additive may be used in the polycarbonate-based resin composition of the present invention as long as the characteristics of the polycarbonate-polyorganosiloxane copolymer (A) are not impaired.

(Additive)

A known additive may be blended into the polycarbonate-based resin composition of the present invention in accordance with its applications or as required. Examples of the additive include various fillers, an antioxidant, a heat stabilizer, a plasticizer, a light stabilizer, a polymerization metal deactivator, a flame retardant, a lubricant, an antistatic agent, a surfactant, an antimicrobial agent, a UV absorber, and a release agent.

The antioxidant can suppress the decomposition of a resin at the time of the production or molding of a thermoplastic resin composition.

A method of producing the polycarbonate-based resin composition of the present invention is not particularly limited as long as the method includes a step of mixing the polycarbonate-polyorganosiloxane copolymer and an optional additive. The composition may be produced by, for example, mixing the polycarbonate-polyorganosiloxane copolymer and the optional additive with a mixer or the like, and melting and kneading the mixture. The melting and kneading may be performed by a method that has been typically employed, for example, a method including using a ribbon blender, a Henschel mixer, a Banbury mixer, a drum tumbler, a single-screw extruder, a twin-screw extruder, a co-kneader, a multi-screw extruder, or the like. A heating temperature at the time of the melting and kneading is appropriately selected from the range of typically from about 150°C to about 300°C, preferably from about 220°C to about 300°C.

[Molded Body]

A molded body of the present invention includes the polycarbonate-based resin composition of the present

invention. The molded body may be produced through use of a melt-kneaded product of the polycarbonate-based resin composition or a pellet thereof obtained through melting and kneading as a raw material by any one of, for example, an injection molding method, an injection compression molding method, an extrusion molding method, a blow molding method, a press molding method, a vacuum molding method, and an expansion molding method. In particular, the molded body is preferably produced through use of the resultant pellet by the injection molding method or the injection compression molding method.

The thickness of the molded body may be arbitrarily set in accordance with its applications. In particular, when the transparency of the molded body is required, the thickness is preferably from 0.2 mm to 4.0 mm, more preferably from 0.3 mm to 3.0 mm, still more preferably from 0.3 mm to 2.0 mm. When the thickness of the molded body is 0.2 mm or more, its warping does not occur and good mechanical strength is obtained. In addition, when the thickness of the molded body is 4.0 mm or less, high transparency is obtained.

A coating film formed of a hard coating film, an antifogging film, an antistatic film, or an antireflection film may be formed on the molded body as required, and a composite coating film formed of two or more kinds thereof may be formed.

Among them, a coating film formed of a hard coating film is particularly preferably formed because the film has good weatherability and can prevent the wear of the surface of the molded body with time. A material for the hard coating film is not particularly limited, and a known material, such as an acrylate-based hard coating agent, a silicone-based hard coating agent, or an inorganic hard coating agent, may be used.

The molded body including the polycarbonate resin of the present invention can be suitably used in members that are each required to have transparency and rigidity, and further, scratch resistance and weatherability, such as: 1) automobile parts, such as a sunroof, a door visor, a rear window, and a side window; 2) building parts, such as a building glass, a soundproof wall, a car port, a sunroom, and gratings; 3) windows for railway vehicles and ships; 4) parts for electrical instruments, such as various parts for a television, a radio-cassette recorder, a video camera, a video tape recorder, an audio player, a DVD player, a telephone, a display, a computer, a register, a copying machine, a printer, a facsimile, and the like, and respective parts for outer plates and housings thereof; 5) parts for precision instruments, such as casings and covers for precision machines, such as a cellular phone, a PDA, a camera, a slide projector, a watch, an electronic calculator, a measuring instrument, and a display instrument; 6) agricultural parts, such as a vinyl house and a greenhouse; and 7) furniture parts, such as a lighting cover, blinds, and interior tools.

## Examples

The present invention is described in more detail below by way of Examples, but the present invention is not limited to these Examples.

### [1. Production of Terminal-modified Polyorganosiloxane]

### Synthesis Example 1: Production of PDMS-1

Under a nitrogen atmosphere, to 100 g of an $\alpha,\omega$-dihydrogen organopolysiloxane having an average chain length of 45, which was represented by the following formula:

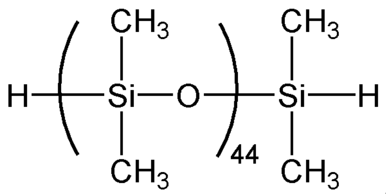
,

35.3 g (molar amount twice as large as that of the polyorganosiloxane) of a one-terminal allyl group-modified polyethylene glycol in which the average number of repetitions of an oxyethylene unit was 12, which was represented by the following formula:

$$H_2C=CH-CH_2-O-(CH_2CH_2O)_{12}-H,$$

was added. 338 Grams (2.5 parts with respect to the total mass of the polyorganosiloxane and the polyethylene glycol) of toluene was added as a solvent to the materials, and then the mixture was sufficiently stirred while its temperature was maintained at 80°C. Next, a toluene solution of a vinylsiloxane complex of platinum (platinum(0)-1,3-divinyl-1,1,3,3-tetramethyldisiloxane complex) was added as a hydrosilylation catalyst in such an amount that the mass of a platinum

atom became 5 ppm by mass with respect to the total mass of a siloxane unit (-[Si$(CH_3)_2$O]-) in the above-mentioned polyorganosiloxane, followed by stirring at a reaction temperature of 110°C for 10 hours. Toluene and the platinum catalyst were removed from the resultant mixture. Thus, a modified polyorganosiloxane PDMS-1 was obtained.

Synthesis Example 2: Production of PDMS-2

A modified polyorganosiloxane PDMS-2 was obtained in the same manner as in Synthesis Example 1 except that: 100 g of an α,ω-dihydrogen organopolysiloxane having an average chain length of 61 was used instead of the α,ω-dihydrogen organopolysiloxane having an average chain length of 45; and 31.4 g of a one-terminal allyl group-modified polyethylene glycol in which the average number of repetitions of an oxyethylene unit was 15 was used instead of the one-terminal allyl group-modified polyethylene glycol in which the average number of repetitions of the oxyethylene unit was 12.

Synthesis Example 3: Production of PDMS-3

A modified polyorganosiloxane PDMS-3 was obtained in the same manner as in Synthesis Example 1 except that: an α,ω-dihydrogen organopolysiloxane having an average chain length of 24 was used instead of the α,ω-dihydrogen organopolysiloxane having an average chain length of 45; and 63.8 g of the one-terminal allyl group-modified polyethylene glycol in which the average number of repetitions of the oxyethylene unit was 12 was used.

Synthesis Example 4: Production of PDMS-4

A modified polyorganosiloxane PDMS-4 was obtained in the same manner as in Synthesis Example 1 except that: a polyorganosiloxane having an average chain length of 30 was used instead of the α,ω-dihydrogen organopolysiloxane having an average chain length of 45; and 8.9 g of ethylene glycol monoallyl ether was used instead of the one-terminal allyl group-modified polyethylene glycol in which the average number of repetitions of the oxyethylene unit was 12.

Ethylene glycol monoallyl ether has one oxyethylene unit.

Synthesis Example 5: Production of PDMS-5

A modified polyorganosiloxane PDMS-5 was obtained in the same manner as in Synthesis Example 1 except that 24.2 g of a one-terminal allyl group-modified polyethylene glycol in which the average number of repetitions of an oxyethylene unit was 8 (manufactured by NOF CORPORATION, UNIOX PK-5002) was used instead of the one-terminal allyl group-modified polyethylene glycol in which the average number of repetitions of the oxyethylene unit was 12.

Synthesis Example 6: Production of PDMS-6

A modified polyorganosiloxane PDMS-6 was obtained in the same manner as in Synthesis Example 1 except that 102.0 g of a one-terminal allyl group-modified polyethylene glycol in which the average number of repetitions of an oxyethylene unit was 38 (manufactured by NOF CORPORATION, UNIOX PK-5005) was used instead of the one-terminal allyl group-modified polyethylene glycol in which the average number of repetitions of the oxyethylene unit was 12.

Synthesis Example 7: Production of PDMS-7

A modified polyorganosiloxane PDMS-7 was obtained in the same manner as in Synthesis Example 1 except that: 100 g of a polyorganosiloxane having an average chain length of 88 was used instead of the α,ω-dihydrogen organopolysiloxane having an average chain length of 45; and 21.2 g of a one-terminal allyl group-modified polyethylene glycol in which the average number of repetitions of an oxyethylene unit was 15 was used instead of the one-terminal allyl group-modified polyethylene glycol in which the average number of repetitions of the oxyethylene unit was 12.

Synthesis Example 8: Production of PDMS-8

Under a nitrogen atmosphere, to 100 g of a polyorganosiloxane having an average chain length of 39, which was represented by the following formula:

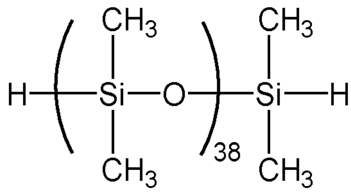

,

9.1 g (molar amount twice as large as that of the polyorganosiloxane) of 2-allylphenol was added. After that, the mixture was sufficiently stirred while its temperature was maintained at 100°C. Next, a toluene solution of a vinylsiloxane complex of platinum (platinum(0)-1,3-divinyl-1,1,3,3-tetramethyldisiloxane complex) was added as a platinum catalyst in such an amount that the mass of a platinum atom became 5 ppm by mass with respect to that of a siloxane unit (-[Si($CH_3$)$_2$O]-) in the above-mentioned polyorganosiloxane, followed by stirring at a reaction temperature of 100°C for 10 hours. Toluene and the platinum catalyst were removed from the resultant mixture. Thus, a modified polyorganosiloxane PDMS-8 was obtained.

The summary of Synthesis Examples 1 to 8 is shown in Table 1 below.

Table 1

| | | Polyorganosiloxane | | Polyether or the like | | | |
|---|---|---|---|---|---|---|---|
| | | | | Allyl ether-modified polyethylene glycol | | Other ether compound | |
| | | Average chain length | Blending amount [g] | Average number of repetitions | Blending amount [g] | Compound | Blending amount [g] |
| Synthesis Example 1 | PDMS-1 | 45 | 100 | 12 | 35.3 | | |
| Synthesis Example 2 | PDMS-2 | 61 | 100 | 15 | 31.4 | | |
| Synthesis Example 3 | PDMS-3 | 24 | 100 | 12 | 63.8 | | |
| Synthesis Example 4 | PDMS-4 | 30 | 100 | | | Ethylene glycol monoallyl ether | 8.9 |
| Synthesis Example 5 | PDMS-5 | 45 | 100 | 8 | 24.2 | | |
| Synthesis Example 6 | PDMS-6 | 45 | 100 | 38 | 102 | | |
| Synthesis Example 7 | PDMS-7 | 88 | 100 | 15 | 21.2 | | |
| Synthesis Example 8 | PDMS-8 | 39 | 100 | | | 2-Allylphenol | 9.1 |

Example 1

A polycarbonate-polyorganosiloxane copolymer was produced by using the following raw materials under the following conditions.

Bisphenol A (BisP-A; 2,489.9 g) serving as a diol monomer and diphenyl carbonate (DPC; 2,500 g) serving as a carbonic acid ester compound (molar ratio between the respective raw materials: BisP-A/DPC = 100/107), and 87.1 g of the modified polyorganosiloxane PDMS-1 obtained in Synthesis Example 1 were loaded into a 10-liter stainless steel-made reactor including a stirring apparatus, a nitrogen introducing tube, a heater, a trap configured to trap distilled phenol, and a decompression apparatus, and these raw material monomers were completely melted at 150°C, followed by the purging of air in the reactor with nitrogen.

1.64 Milliliters (amount $1.5 \times 10^{-6}$ times as large as the number of moles of the entire diol monomer) of 0.01 mol/L sodium hydroxide was loaded as a catalyst into the reactor to initiate polymerization. A temperature in the reactor was

increased to 180°C, and a pressure in the reactor was reduced to 200 mmHg (26.6 kPa), over about 60 minutes, and the reaction conditions were held until the amount of phenol to be distilled out became 0.2 L.

Next, the temperature in the reactor was increased to 240°C over about 120 minutes, and the reaction conditions were held until 1.5 L of phenol was distilled out. Subsequently, the temperature in the reactor was increased to 280°C, and the pressure in the reactor was reduced to 1 mmHg (0.1 kPa) or less, over about 120 minutes. Two liters or more of phenol was distilled out, and the reaction was continued until a predetermined stirring torque was obtained.

After that, nitrogen was introduced into the reactor to increase the pressure to normal pressure, and 0.037 g (amount 10 times as large as the number of moles of the loaded sodium hydroxide) of butyl p-toluenesulfonate was loaded as a catalyst deactivator thereinto.

Further, the following antioxidant 1 and antioxidant 2 were loaded into the reactor so that each of their amounts became 0.05 part by mass with respect to the theoretical yield of the polycarbonate-polyorganosiloxane copolymer, followed by sufficient stirring. After that, high-pressure nitrogen was introduced into the reactor to extrude the strand of the polycarbonate-polyorganosiloxane copolymer in a molten state from the bottom portion of the reactor. The resultant strand was cut with a pelletizer to provide a pellet of a polycarbonate-polyorganosiloxane copolymer PC-POS1.

The raw materials used in the production are as described below.

·Bisphenol A (BisP-A) [manufactured by Idemitsu Kosan Co., Ltd.]
·Diphenyl carbonate (DPC) [manufactured by Mitsui Fine Chemicals, Inc.]
·0.01 mol/L sodium hydroxide aqueous solution [manufactured by Fujifilm Wako Pure Chemical Corporation]
·Antioxidant (C)

Antioxidant 1: tris(2,4-di-tert-butylphenyl)phosphite [manufactured by BASF Japan Ltd., Irgafos 168]
Antioxidant 2: pentaerythritol-tetrakis[3-(3,5-di-tert-butyl-4-hydroxyphenyl)propionate] [manufactured by BASF Japan Ltd., Irganox 1010]

Example 2

A pellet of a polycarbonate-polyorganosiloxane copolymer was produced in the same manner as in Example 1 except that 179.7 g of the modified polyorganosiloxane PDMS-1 was used.

Example 3

A pellet of a polycarbonate-polyorganosiloxane copolymer was produced in the same manner as in Example 1 except that 244.8 g of the modified polyorganosiloxane PDMS-1 was used.

Example 4

A pellet of a polycarbonate-polyorganosiloxane copolymer was produced in the same manner as in Example 1 except that 117.3 g of the PDMS-2 obtained in Synthesis Example 2 was used as a modified polyorganosiloxane.

Example 5

A pellet of a polycarbonate-polyorganosiloxane copolymer was produced in the same manner as in Example 1 except that 179.7 g of the PDMS-2 was used as a modified polyorganosiloxane.

Example 6

A pellet of a polycarbonate-polyorganosiloxane copolymer was produced in the same manner as in Example 1 except that 244.8 g of the PDMS-2 was used as a modified polyorganosiloxane.

Example 7

A pellet of a polycarbonate-polyorganosiloxane copolymer was produced in the same manner as in Example 1 except that: 179.7 g of the PDMS-1 was used as a modified polyorganosiloxane; and the reaction was continued for 30 minutes even after the predetermined torque had been achieved.

Example 8

A pellet of a polycarbonate-polyorganosiloxane copolymer was produced in the same manner as in Example 1 except that: 117.3 g of the PDMS-2 was used as a modified polyorganosiloxane; and the reaction was continued for 30 minutes even after the predetermined torque had been achieved.

Comparative Example 1

A pellet of a polycarbonate-polyorganosiloxane copolymer was produced in the same manner as in Example 1 except that 179.7 g of the PDMS-3 was used as a modified polyorganosiloxane.

Comparative Example 2

A pellet of a polycarbonate-polyorganosiloxane copolymer was produced in the same manner as in Example 1 except that 179.7 g of the PDMS-4 was used as a modified polyorganosiloxane.

Comparative Example 3

A pellet of a polycarbonate-polyorganosiloxane copolymer was produced in the same manner as in Example 1 except that 179.7 g of the PDMS-5 was used as a modified polyorganosiloxane.

Comparative Example 4

A pellet of a polycarbonate-polyorganosiloxane copolymer was produced in the same manner as in Example 1 except that 312.8 g of the PDMS-5 was used as a modified polyorganosiloxane.

Comparative Example 5

A pellet of a polycarbonate-polyorganosiloxane copolymer was produced in the same manner as in Example 1 except that 179.7 g of the PDMS-6 was used as a modified polyorganosiloxane.

Comparative Example 6

A pellet of a polycarbonate-polyorganosiloxane copolymer was produced in the same manner as in Example 1 except that 179.7 g of the PDMS-7 was used as a modified polyorganosiloxane.

Comparative Example 7

A pellet of a polycarbonate-polyorganosiloxane copolymer was produced in the same manner as in Example 1 except that 179.7 g of the PDMS-8 was used as a polyether-modified polyorganosiloxane.

Comparative Example 8

A pellet of a polycarbonate-polyorganosiloxane copolymer was produced in the same manner as in Example 1 except that 8.4 g of the PDMS-1 was used as a modified polyorganosiloxane.

[Evaluation]

The pellets of the polycarbonate-polyorganosiloxane copolymers produced in Examples 1 to 8 and Comparative Examples 1 to 8 were subjected to the following evaluations.

(1) $^1$H-NMR Measurement

The average chain length of a polyorganosiloxane structure, the average number of repetitions of a polyether structure, the content of the polyorganosiloxane-containing block (A-1), and the content of the polyorganosiloxane structure (A-3) were calculated on the basis of the integrated values of peaks derived from the following specific structures, the values being obtained by $^1$H-NMR measurement.

| | |
|---|---|
| NMR apparatus: | ECA-500 manufactured by JEOL RESONANCE Inc. |
| Probe: | TH5 corresponding to a 5 φ NMR sample tube |
| Observation range: | From -5 ppm to 15 ppm |
| Observation center: | 5 ppm |
| Pulse repetition time: | 9 seconds |
| Pulse width: | 45° |
| Number of scans: | 256 times |
| NMR sample tube: | 5 φ |
| Sample amount: | From 30 mg to 40 mg |
| Solvent: | Deuterated chloroform |
| Measurement temperature: | Room temperature |

A: The integrated value of the peak of the meta position of a phenyl moiety observed at a δ of from about 7.3 to about 7.5

B: The integrated value of the peak of a methylene group of a PEG moiety observed at a δ of from about 3.3 to about 4.5

C: The integrated value of the peak of a methyl group of a bisphenol A moiety observed at a δ of from about 1.50 to about 2.00

D: The integrated value of the peak of a methyl group of a dimethylsiloxane moiety observed at a δ of from about -0.02 to about 0.4

E: The integrated value of the peak of a methylene group of a dimethylsiloxane terminal moiety observed at a δ of about 0.52

F: The integrated value of the peak of a polyethylene glycol terminal methylene group linked to a carbonate bond, the peak being observed at a δ of about 4.3

$$a = A/2$$

$$b = B/4$$

$$c = (C-e\times 2)/6$$

$$d = D/6$$

$$e = E/2$$

$$f = F/2$$

$$T = a+b+c+d$$

$$h = a/T\times 100$$

$$i = b/T\times 100$$

$$j = c/T\times 100$$

$$k = d/T\times 100$$

$$TW = h\times93+i\times44+j\times254+k\times74.1$$

·Average chain length of polyorganosiloxane structure

$$\text{Average of } n^as = d/(e/2)$$

·Average number of repetitions of polyether structure

$$\text{Average of } n^bs = b/e$$

·Content of polyorganosiloxane-containing block (A-1)

$$\text{Content [mass\%] of (A-1)} = (i\times44+k\times74.1)/TW\times100$$

·Content of polyorganosiloxane structure (A-3)

$$\text{Content [mass\%] of (A-3)} = (k\times74.1)/TW\times100$$

(2) Method of measuring Viscosity-average Molecular Weight

The viscosity-average molecular weight (Mv) of each of the polycarbonate-polyorganosiloxane copolymers was calculated from the following equation (Schnell's equation) by using a limiting viscosity [η] determined through the measurement of the viscosity of a methylene chloride solution (concentration: g/L) thereof at 20°C with an Ubbelohde-type viscometer. The results are shown in Tables 2 and 3.

$$[\eta]=1.23\times10^{-5}Mv^{0.83}$$

(3) Fluidity: Method of measuring Q-value

The Q-value of each of the copolymers was measured by the following method in conformity with JIS K 7210-1:2014.

Each of the produced pellets described above was loaded into a Koka-type flow tester, and the amount ($\times10^{-2}$ mL/sec) of a molten resin flowing out of a nozzle having a diameter of 1 mm and a length of 10 mm was measured at 280°C and under a pressure of 160 kg. The results are shown in Tables 2 and 3.

The Q-value (flow value) [unit: $10^{-2}$ mL/sec] represents the outflow amount of the copolymer per unit time, and a higher numerical value means that the copolymer is more excellent in fluidity.

(4) Impact Resistance: Method of measuring Charpy Impact Strength

Each of the produced pellets described above was dried at 100°C for 5 hours, and was then subjected to injection molding at a cylinder temperature of 280°C and a mold temperature of 80°C to provide a dumbbell test piece for a mechanical property evaluation (total length: 169 mm, length/width of a narrow parallel portion: 80 mm/10 mm, length/width of each of wide parallel portions: 35 mm/20 mm, thickness: 3 mm). A strip-shaped test piece having a length of 80 mm, a width of 10 mm, and a thickness of 3 mm was cut out of the perpendicular portion of the dumbbell test piece. Further, a notch (r=0.25 mm±0.05 mm) was made in the test piece by a post-process, and the Charpy impact strengths of the resultant test piece at 23°C, 0°C, and -20°C were measured with a Charpy impact tester (CHARPY IMPACT TESTER, model 611, manufactured by Toyo Seiki Seisaku-sho, Ltd.) in conformity with ISO 179-1:2010. The results are shown in Tables 2 and 3.

(5) Method of measuring Tensile Elongation

Each of the produced pellets described above was dried at 100°C for 5 hours, and was then subjected to injection molding at a cylinder temperature of 280°C and a mold temperature of 80°C to provide a dumbbell test piece for a mechanical property evaluation (total length: 169 mm, length/width of a narrow parallel portion: 80 mm/10 mm,

length/width of each of wide parallel portions: 35 mm/20 mm, thickness: 4 mm). The tensile elongation of the test piece was measured in conformity with ISO 527-1,2:2012. The results are shown in Tables 2 and 3.

(6) Method of evaluating Molded Body Appearance

Each of the produced pellets described above was dried at 100°C for 5 hours, and was then subjected to injection molding at a cylinder temperature of 280°C and a mold temperature of 80°C to provide a dumbbell test piece for a mechanical property evaluation (total length: 169 mm, length/width of a narrow parallel portion: 80 mm/10 mm, length/width of each of wide parallel portions: 35 mm/20 mm, thickness: 4 mm). The wide parallel portions were grasped, and the test piece was bent so that a distance between its end portions (width: 20 mm) became 140 mm. The presence or absence of surface peeling in the narrow parallel portion at that time was visually evaluated.

A: Surface peeling is present.
B: Surface peeling is absent.

The results are shown in Tables 2 and 3.

Table 2

| | | Example | | | | | | | |
|---|---|---|---|---|---|---|---|---|---|
| | | 1 | 2 | 3 | 4 | 5 | 6 | 7 | 8 |
| Average of $n^a$s | | 45.5 | 45.1 | 44.8 | 60.8 | 61 | 61.1 | 45.2 | 61 |
| Average of $n^b$s | | 12.1 | 12 | 11.9 | 15.1 | 15.2 | 14.9 | 12.1 | 15.3 |
| Average of $n^a$s/Average of $n^b$s | | 0.27 | 0.27 | 0.27 | 0.25 | 0.25 | 0.25 | 0.27 | 0.25 |
| Content of (A-1) | mass% | 3.0 | 5.8 | 7.8 | 3.8 | 5.9 | 8.0 | 5.9 | 3.8 |
| Content of (A-3) | mass% | 2.2 | 4.3 | 5.6 | 3.0 | 4.5 | 5.8 | 4.3 | 2.9 |
| Viscosity-average molecular weight | Mv | 20,800 | 20,100 | 21,600 | 20,400 | 22,500 | 23,800 | 23,400 | 23,700 |
| Fluidity Q-value | [$\times 10^{-2}$ mL/sec] | 18 | 20 | 36 | 18 | 36 | 48 | 14 | 16 |
| Charpy impact strength (3 mmt, with notch) | 23°C | 88 | 86 | 73 | 77 | 95 | 89 | 75 | 89 |
| | 0°C | 75 | 72 | 66 | 73 | 85 | 82 | 75 | 84 |
| | -20°C | 68 | 66 | 65 | 67 | 69 | 71 | 72 | 82 |
| Tensile elongation | [%] | 67 | 70 | 68 | 69 | 75 | 73 | 68 | 97 |
| Molded body appearance | | A | A | A | A | A | A | A | A |

Table 3

| | | Comparative Example | | | | | | | |
|---|---|---|---|---|---|---|---|---|---|
| | | 1 | 2 | 3 | 4 | 5 | 6 | 7 | 8 |
| Average of $n^a$s | | 23.8 | 29.5 | 45.0 | 44.8 | 45.1 | 88.3 | - | 45.0 |
| Average of $n^b$s | | 12.0 | 1.0 | 8.2 | 8.1 | 37.7 | 15.1 | - | 12.3 |

(continued)

| | | Comparative Example | | | | | | | |
|---|---|---|---|---|---|---|---|---|---|
| | | 1 | 2 | 3 | 4 | 5 | 6 | 7 | 8 |
| Average of $n^a$-s/Average of $n^b$s | | 0.50 | 0.03 | 0.18 | 0.18 | 0.84 | 0.17 | - | 0.27 |
| Content of (A-1) | mass% | 6.0 | 5.8 | 5.9 | 10.1 | 6.0 | 4.9 | - | 0.9 |
| Content of (A-3) | mass% | 3.5 | 5.5 | 4.9 | 7.9 | 2.7 | 5.0 | 5.5 | 0.6 |
| Viscosity-average molecular weight | Mv | 20,700 | 20,200 | 20,100 | 20,100 | 19,600 | 20,500 | 20,000 | 20,700 |
| Fluidity Q-value | [$\times 10^{-2}$ mL/sec] | 23 | 15 | 24 | 25 | 52 | 24 | 35 | 12 |
| Charpy impact strength (3 mmt, with notch) | 23°C | 10 | 61 | 81 | 85 | 14 | 85 | 63 | 76 |
| | 0°C | 8 | 56 | 35 | 70 | 13 | 75 | 55 | 63 |
| | -20°C | 8 | 38 | 12 | 65 | 12 | 56 | 43 | 25 |
| Tensile elongation | [%] | 88 | 12 | 18 | 3 | 49 | 11 | 8 | 72 |
| Molded body appearance | | A | B | B | B | A | B | B | A |

## Claims

**1.** A polycarbonate-polyorganosiloxane copolymer (A), comprising:

a polyorganosiloxane-comprising block (A-1) comprising a constituent unit represented by the following formula (1); and
a polycarbonate block (A-2) comprising repetition of a constituent unit represented by the following formula (2),
wherein a content of the polyorganosiloxane-comprising block (A-1) is 2 mass% or more and 30 mass% or less, and
wherein a ratio [(average of $n^b$s)/(average of $n^a$s)] of an average of $n^b$s to an average of $n^a$s is 0.2 or more and 0.4 or less:

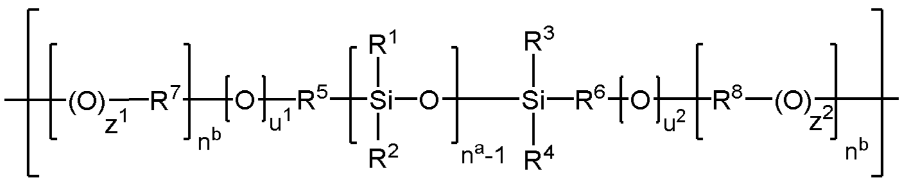

(1)

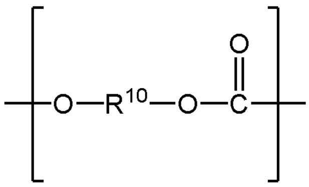

(2)

wherein $R^1$ to $R^4$ each independently represent a hydrogen atom, a halogen atom, an alkyl group having 1 to 10 carbon atoms, an alkoxy group having 1 to 10 carbon atoms, an aryl group having 6 to 12 carbon atoms, or an

alkylaryl group having 7 to 22 carbon atoms, $R^5$ and $R^6$ each independently represent an alkylene group having 1 to 3 carbon atoms, and each of these groups may comprise, in at least one of a main chain or a side chain thereof, at least one group selected from the group consisting of: -O-; -COO-; -CO-; -S-; -NH-; and $-NR^{111}-$, a plurality of $R^7$s or $R^8$s may be identical to or different from each other, and each represent an arylene group having 6 to 20 carbon atoms, an alkylene group having 1 to 10 carbon atoms, or an alkylarylene group having 7 to 22 carbon atoms, and each of these groups may comprise, in at least one of a main chain or a side chain thereof, at least one group selected from the group consisting of: -O-; - COO-; -CO-; -S-; -NH-; and $-NR^{111}-$, $R^{111}$ represents an alkyl group having 1 to 10 carbon atoms, or an aryl group having 6 to 10 carbon atoms, $z^1$, $z^2$, $u^1$, and $u^2$ each represent 0 or 1, $n^a$ represents an integer of from 2 to 500, $n^b$s each independently represent an integer of from 2 to 200, and $R^{10}$ represents a divalent aliphatic hydrocarbon group having 2 to 40 carbon atoms, a divalent alicyclic hydrocarbon group having 3 to 40 carbon atoms, or a divalent aromatic hydrocarbon group having 6 to 20 carbon atoms, and each of these groups may be substituted with a substituent, and may comprise at least one atom selected from the group consisting of: an oxygen atom; a nitrogen atom; a sulfur atom; and a halogen atom.

2. The polycarbonate-polyorganosiloxane copolymer according to claim 1, wherein in the polycarbonate-polyorganosiloxane copolymer (A), the average of $n^a$s is 10 or more and 90 or less.

3. The polycarbonate-polyorganosiloxane copolymer according to claim 1 or 2, wherein the ratio [(average of $n^b$s)/(average of $n^a$s)] of the average of $n^b$s to the average of $n^a$s is 0.2 or more and 0.35 or less.

4. The polycarbonate-polyorganosiloxane copolymer according to any one of claims 1 to 3, wherein the polyorganosiloxane-comprising block (A-1) is represented by the formula (1), the following formula (1-2), or the following formula (1-3):

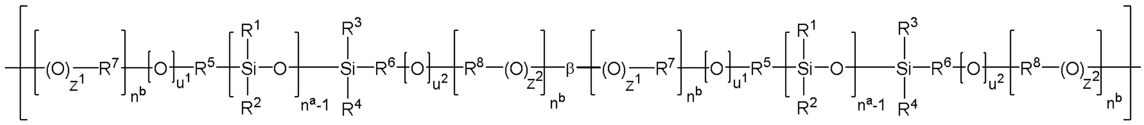

(1-2)

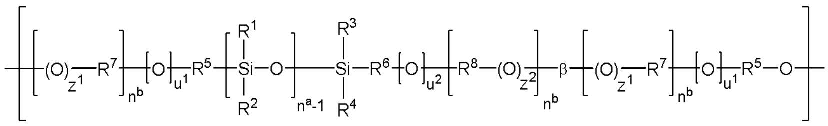

(1-3)

wherein $R^1$ to $R^8$, $z^1$, $z^2$, $u^1$, $u^2$, $n^a$, and $n^b$ each represent the same meaning as that described above, and when any one of the symbols is present in plurality, the plurality of symbols may be identical to or different from each other, and β represents a divalent group derived from a diisocyanate compound, or a divalent group derived from a dicarboxylic acid or a dicarboxylic acid halide.

5. The polycarbonate-polyorganosiloxane copolymer according to any one of claims 1 to 4, wherein the polycarbonate block (A-2) formed of the repetition of the constituent unit represented by the formula (2) comprises a constituent unit represented by the following formula (111):

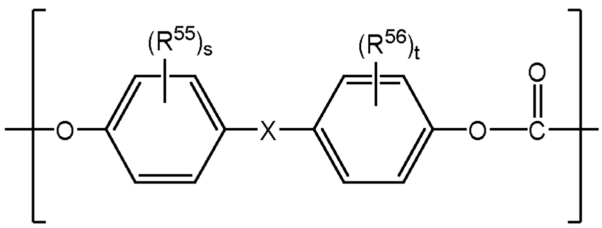

(111)

wherein $R^{55}$ and $R^{56}$ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O-, or -CO-, and "s" and "t" each independently represent an integer of from 0 to 4.

**6.** The polycarbonate-polyorganosiloxane copolymer according to any one of claims 1 to 5, wherein in the formula (1), $R^1$ to $R^4$ each represent a methyl group.

**7.** The polycarbonate-polyorganosiloxane copolymer according to any one of claims 1 to 6, wherein in the formula (1), $R^5$ and $R^6$ each represent a trimethylene group ($-(CH_2)_3-$).

**8.** The polycarbonate-polyorganosiloxane copolymer according to any one of claims 1 to 7, wherein in the formula (1), $R^7$ and $R^8$ each represent a dimethylene group ($-(CH_2)_2-$), a methyl-substituted dimethylene group ($-CH_2CH(CH_3)-$ or $-CH(CH_3)CH_2-$), a trimethylene group ($-(CH_2)_3-$), or a tetramethylene group ($-(CH_2)_4-$).

**9.** The polycarbonate-polyorganosiloxane copolymer according to any one of claims 1 to 8, wherein a content of a polyorganosiloxane structure (A-3) formed of repetition of a constituent unit represented by the following formula (3), the structure being comprised in the polyorganosiloxane-comprising block (A-1), in the polycarbonate-polyorganosiloxane copolymer is 0.1 mass% or more and 30 mass% or less:

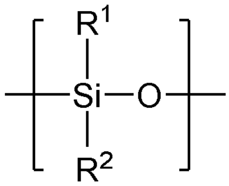

(3)

wherein $R^1$ and $R^2$ each represent the same meaning as that described above.

**10.** The polycarbonate-polyorganosiloxane copolymer according to any one of claims 1 to 9, wherein the polycarbonate-polyorganosiloxane copolymer has a viscosity-average molecular weight (Mv) of 15,000 or more and 30,000 or less.

**11.** The polycarbonate-polyorganosiloxane copolymer according to any one of claims 1 to 10, wherein the polycarbonate-polyorganosiloxane copolymer is obtained by a melt polymerization method.

**12.** The polycarbonate-polyorganosiloxane copolymer according to any one of claims 1 to 11, wherein the polycarbonate-polyorganosiloxane copolymer is obtained by using a diol monomer (a1).

**13.** A polycarbonate-based resin composition, comprising the polycarbonate-polyorganosiloxane copolymer of any one of claims 1 to 12.

**14.** A molded body, comprising the polycarbonate-based resin composition of claim 13.

**INTERNATIONAL SEARCH REPORT**

International application No. **PCT/JP2023/021828**

**A. CLASSIFICATION OF SUBJECT MATTER**

***C08G 64/18***(2006.01)i; ***C08G 77/448***(2006.01)i; ***C08G 77/46***(2006.01)i; ***C08L 69/00***(2006.01)i
FI: C08G64/18; C08G77/448; C08G77/46; C08L69/00

According to International Patent Classification (IPC) or to both national classification and IPC

**B. FIELDS SEARCHED**

Minimum documentation searched (classification system followed by classification symbols)

C08G64/18; C08G77/448; C08G77/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/112257 A1 (IDEMITSU KOSAN CO., LTD.) 10 June 2021 (2021-06-10) claims, paragraphs [0002], [0042]-[0043], [0095]-[0153] | 1-14 |
| A | WO 2016/203917 A1 (IDEMITSU KOSAN CO., LTD.) 22 December 2016 (2016-12-22) | 1-14 |
| A | JP 10-60117 A (TORAY DOW CORNING SILICONE CO LTD) 03 March 1998 (1998-03-03) | 1-14 |
| A | JP 2018-135540 A (IDEMITSU KOSAN CO., LTD.) 30 August 2018 (2018-08-30) | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/021828**

| Patent document cited in search report | Publication date (day/month/year) | Patent family member(s) | Publication date (day/month/year) |
| --- | --- | --- | --- |
| WO 2021/112257 A1 | 10 June 2021 | US 2023/0038766 A1<br>claims, paragraphs [0002], [0057]-[0058], [0146]-[0277], tables 1-3 | |
| | | EP 4071194 A1 | |
| | | CN 114746474 A | |
| | | KR 10-2022-0112765 A | |
| | | TW 202130709 A | |
| WO 2016/203917 A1 | 22 December 2016 | JP 2020-189994 A | |
| | | US 2018/0171108 A1 | |
| | | EP 3312241 A1 | |
| | | CN 107709460 A | |
| | | KR 10-2018-0019101 A | |
| | | TW 201708382 A | |
| JP 10-60117 A | 03 March 1998 | (Family: none) | |
| JP 2018-135540 A | 30 August 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015189953 A
- WO 2021112257 A1
- WO 2021112259 A1
- WO 2021112260 A1
- JP 11217390 A
- JP 2662310 B
- JP 5652691 B
- JP 2014080462 A